# EUROPÄISCHE PATENTSCHRIFT

(11) **EP 1 879 936 B1**
(45) Veröffentlichungstag und Bekanntmachung des Hinweises auf die Patenterteilung: **10.01.2018**
(21) Anmeldenummer: 06742857.3
(22) Anmeldetag: 10.05.2006
(51) Int. Cl.: C08G 18/28, C08G 18/40, C08G 18/42, C08G 18/48, C08G 18/71, C09J 175/04

(54) **WÄSSRIGE, LAGERSTABILE EMULSION ALPHA-SILYL TERMINIERTER POLYMERE, DEREN HERSTELLUNG UND VERWENDUNG**
AQUEOUS EMULSION OF ALPHA-SILYL TERMINATED POLYMERS THAT IS STABLE IN STORAGE, PRODUCTION OF SAID EMULSION AND USE OF THE LATTER
EMULSION AQUEUSE DE POLYMERES A TERMINAISON ALPHA-SILYLE PRESENTANT UNE BONNE STABILITE AU STOCKAGE ET PRODUCTION ET UTILISATION DE CETTE EMULSION

(30) Priorität: 13.05.2005 DE 102005023050
(43) Veröffentlichungstag der Anmeldung: 23.01.2008
(73) Patentinhaber: Henkel AG & Co. KGaA, 40589 Düsseldorf (DE)
(72) Erfinder: HATTEMER, Erik, 40597 Düsseldorf (DE); UNGER, Lothar, 46049 Oberhausen (DE); FERENCZ, Andreas, 40223 Düsseldorf (DE); BACHON, Thomas, 40597 Düsseldorf (DE); BRAUN, Daniela, Pudong New District, Shanghai 200120 (CN); SCHMIDT, Tamara, 46049 Obrhausen (DE); JÜTTNER, Werner, 40627 Düsseldorf (DE)
(86) Internationale Anmeldenummer: PCT/EP2006/004372
(87) Internationale Veröffentlichungsnummer: WO 2006/122684

(56) Entgegenhaltungen:
- EP-A- 0 549 626
- WO-A-91/08244
- WO-A1-00/35981
- DE-A1- 10 237 271
- JP-A- 2002 138 251
- US-A- 5 041 494

## Beschreibung

Die vorliegende Erfindung betrifft wässrige, lagerstabile Emulsionen α-silyl terminierter Polymere, deren Herstellung und Verwendung als Klebstoffe, Dichtungsmassen und Beschichtungsmittel.

Silylterminierte, feuchtigkeitshärtende Polymermassen werden im zunehmenden Maße als Beschichtungs-, Dichtungs- und Klebemassen im Bauwesen und in der Automobilindustrie verwendet. Bei solchen Anwendungen werden hohe Anforderungen an das Dehn- und Adhäsionsvermögen sowie an die Aushärtegeschwindigkeit gestellt. Weiterhin weisen solche silylterminierten Polymere oft Wasser abstoßende Eigenschaften auf, die den daraus hergestellten Dicht-, Beschichtungs- oder Klebemassen ausgezeichnete Wasserfestigkeit und Wärmestandfestigkeit verleihen.

Aus dem Stand der Technik sind alkoxysilanterminierte Polymere bekannt, die als weichelastische Dichtungs-, Beschichtungs- und Klebemassen eingesetzt werden.

So beschreibt die EP-B 0 549 626 alkoxysilylterminierte, feuchtigkeitshärtende Einkomponenten-Polyurethane, die beispielsweise als Fugendichtungsmassen Verwendung finden. Die offenbarten Verbindungen weisen eine schnelle Hautbildung und schnelle Klebefreiheit, auch nach längerer Lagerung auf. Nachteilig bei den beschriebenen Verbindungen ist jedoch, dass sie unter Feuchtigkeitsausschluss gelagert werden müssen und über einen längeren Lagerzeitraum die Gefahr irreversibler Eigenschaftsänderungen besteht.

Um diesem Nachteil Abhilfe zu schaffen, wurden in der Vergangenheit Versuche unternommen, Emulsionen oder Emulsionen silylterminierter Polymere herzustellen.

US 5 919 860 und US 5 041 494 beschreiben wässrige Polyurethan Dispersionen für Beschichtungen, welche Alkoxysilane enthalten. Die Polyurethane werden hierbei mit ionischen Gruppen modifiziert.

Die beschriebenen Emulsionen weisen jedoch zumeist einen geringen Feststoffgehalt auf. Werden solche Emulsionen zur Verklebung von saugfähigen Materialien benutzt, so führt der hohe Wassergehalt zu einer hohen Belastung des Substrats mit Wasser. Dies kann beispielsweise bei Papierverklebungen zu unerwünschten Formveränderungen des Substrats führen.

Die WO 91/08244 betrifft beispielsweise Steinschutzmittel, die alkoxysilylterminierte Polyurethane enthalten. Die Polymergehalte der beschriebenen Emulsionen sind jedoch sehr gering, und liegen zwischen 5 und 30 Gew.-%. Die beschriebenen Emulsionen sind weder als Oberflachenbeschichtungsmittel im Sinne einer Herstellung von mechanisch belastbaren Überzügen, noch als Dicht- oder Klebstoff brauchbar.

DE 102 37 271 A1 betrifft Polymermassen, die alkoxysilanterminierte Polymere enthalten, wobei die Polymermassen bei 23°C und 50% relativer Luftfeuchtigkeit Hautbildungszeiten > 40 min aufweisen, und die Hautbildungszeiten dieser Polymermassen durch den Zusatz eines Katalysators in Konzentrationen bis zu 3 Gew.-% auf < 20 min reduziert werden können.

Problematisch wirkt sich bei den meisten aus dem Stand der Technik bekannten Emulsionen von silylterminierten Polymeren aus, dass lediglich geringe Feststoffgehalte erzielt werden können. Solche geringen Feststoffgehalte sind jedoch, neben dem oben beschriebenen Nachteil der Substratbelastung mit Wasser mit einer Reihe von Nachteilen wie beispielsweise sehr langsame Verklebung von nicht augfähigen Substraten behaftet.

Eine Möglichkeit der Überwindung dieser Nachteile offenbart die WO 00/35981, welche Emulsionen silylterminierter Polymere mit hohem Feststoffgehalt bereitstellt.

Da im Stand der Technik jedoch bislang nur Dispersionen bzw. Emulsionen der vergleichsmäßig reaktionsträgen γ-silylterminierten Polymere offenbart sind, war es Aufgabe der vorliegenden Erfindung wässrige Emulsionen der wesentlich reaktiveren α-silylterminierten Polymere bereitzustellen, die neben einem hohen Feststoffgehalt eine bislang unerreichte Lagerstabilität aufweisen. Der Begriff "Feststoffgehalt" wird im Folgenden als gewichtsprozentualer Anteil der Emulsionsbestandteile abzüglich des in der Emulsion enthaltenen Gewichtsanteils an Wasser, bezogen auf das Gesamtgewicht der Emulsion verstanden. Diese Aufgabe wird durch die Bereitstellung wässriger, lagerstabiler Emulsionen eines oder mehrerer α-silyl terminierter Polymere, der allgemeinen Formel (I): 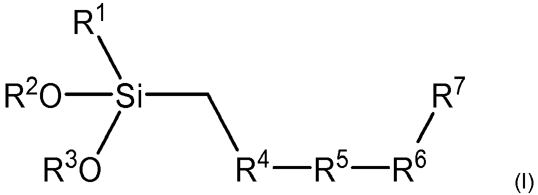 worin R¹ eine geradkettige oder verzweigte Alkylgruppe oder Alkoxygruppe mit 1 bis 4 Kohlenstoffatomen ist, R² und R³ unabhängig voneinander eine geradkettige oder verzweigte Alkylgruppe mit 1 bis 4 Kohlenstoffatomen sind, R⁴ und R⁶ unabhängig voneinander, divalente organische Verbindungsgruppen sind, wobei R⁴ und R⁶ für einen Rest -NR⁹-(CO)-R¹⁰- stehen, wobei der Rest R¹⁰ an R⁵ gebunden ist, und R⁹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und R¹⁰ für eine Einfachbindung oder einen Rest -NR¹¹-R¹²-steht, wobei der Rest R¹² an R⁵ gebunden ist, und R¹¹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und R¹² für eine Gruppe -R¹³-(NH)ᵣ-(CO)- Gruppe mit r = 0 oder 1 steht, worin R¹³ für eine Alkylaryl-Gruppe mit 6 bis 11 Kohlenstoffatomen, eine Aralkylgruppe mit 6 bis 11 Kohlenstoffatomen oder eine Arylgruppe mit 5 bis 10 Kohlenstoffatomen steht, wobei die CO-Gruppe an R⁵ verbunden ist, R⁵ ein hydrophober divalenter Polymer-Rest ist; und R⁷ ein Rest CH₂SiR¹(OR²)(OR³) ist, worin R¹, R² und R³ obige Bedeutung besitzen oder R⁷ für einen Rest steht, der dem Polymer der allgemeinen Formel (I) die Eigenschaft verleiht in Wasser unter Bildung einer Öl-In-Wasser-Emulsion selbst zu emulgieren; und wobei die Emulsion einen pH-Wert von 2 bis 11 und einen Festkörpergehalt von 40 bis 95 Gew.-% bezogen auf das Gesamtgewicht der Emulsion besitzt, und die Emulsion einen oder mehrere anionische und/oder nicht-ionische Emulgatoren enthält, die zur Bildung einer ÖI-in-Wasser-Emulsion befähigt sind; und wobei, für den Fall, dass R⁷ für einen Rest steht, der dem Polymer der allgemeinen Formel (I) die Eigenschaft verleiht in Wasser unter Bildung einer Öl-In-Wasser-Emulsion selbst zu emulgieren, zumindest ein Teil des Emulgators oder der Emulgatoren durch Polymere der Formel (I) ersetzt ist.

Derartige Emulsionen sind erhältlich durch das Zumischen der wässrigen Emulsionsanteile zu einer Mischung aus dem oder den Emulgatoren und dem oder den Polymeren der allgemeinen Formel (I).

In der allgemeinen Formel (I) steht bevorzugt R¹ für Methyl, Ethyl, Methoxy oder Ethoxy und R² und R³ stehen bevorzugt und unabhängig voneinander für Methyl oder Ethyl. Besonders bevorzugt steht R¹ für Methyl oder Methoxy und R² und R³ für Methyl. Hierunter sind, sofern eine erhöhte Reaktivität und Vernetzungsneigung erwünscht sind, die Trimethoxy-Verbindungen bevorzugt.

R⁴ und R⁶ können unabhängig voneinander, divalente Verbindungsgruppen darstellen, wobei R⁴ und R⁶ für einen Rest -NR⁹-(CO)-R¹⁰-, wie hierin definiert, stehen. Der Begriff "divalent", wie er in der vorliegenden Erfindung durchgehend verwendet wird, bedeutet, dass der entsprechende Rest Valenzen für die Bindung der zwei Gruppen, die zur entsprechenden Gruppe direkt benachbart sind, besitzt. Für R⁶ bedeutet dies beispielsweise, dass dieser Rest je eine Valenz für die Bindung zu R⁵ und R⁷ besitzt. Ungeachtet dessen kann es sich beim Rest R⁶ jedoch auch um einen weiter verzweigten Rest handeln. Dies gilt analog für die Reste R⁴ und R⁵.

Eine der einfachsten Gruppen R⁴ entsteht beispielsweise wenn ein isocyanat-terminiertes α-Silan direkt an ein hydroxyterminiertes Polymer gebunden wird. Hierbei entsteht als Verbindungsgruppe R⁴ eine Urethangruppe. Es kommen jedoch auch indirekte Verknüpfungen des α-Silans mit dem Polymerrückgrat des Polymers der Formel (I) in Betracht. So kann der Rest R⁴ auch aus einem Verbindungsmolekül gebildet werden, welches einerseits zur kovalenten Reaktion mit einer funktionellen Gruppe des α-Silans und andererseits zur kovalenten Reaktion mit dem Polymerrückgrat befähigt ist. So können beispielsweise Diisocyanate mit einem Aminosilan unter Ausbildung einer Harnstoffgruppe einerseits und mit einem hydroxyterminierten Polymer unter Ausbildung einer Urethangruppe andererseits reagieren, wobei eine Harnstoff- und Urethan-Gruppen enthaltende divalente Verbindungsgruppe R⁴ gebildet wird. Das für die Anbindung des α-Silans Gesagte gilt in gleicher Weise auch für die Gruppe R⁷.

Die Reste R⁴ und R⁶ stehen für einen Rest -NR⁹-(CO)-R¹⁰-, wobei der Rest R¹⁰ an R⁵ gebunden ist, und R⁹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und R¹⁰ für eine Einfachbindung oder einen Rest -NR¹¹-R¹²- steht, wobei der Rest R¹² an R⁵ gebunden ist, und R¹¹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und R¹² für eine Gruppe -R¹³-(NH)ᵣ-(CO)- mit r = 0 oder 1 steht, worin R¹³ für eine Alkylaryl-Gruppe mit 6 bis 11 Kohlenstoffatomen, eine Aralkylgruppe mit 6 bis 11 Kohlenstoffatomen oder eine Arylgruppe mit 5 bis 10 Kohlenstoffatomen steht, wobei die CO-Gruppe an R⁵ gebunden ist.

Besonders bevorzugt stehen R⁴ und R⁶ unabhängig voneinander für eine Gruppe der Formel (II): 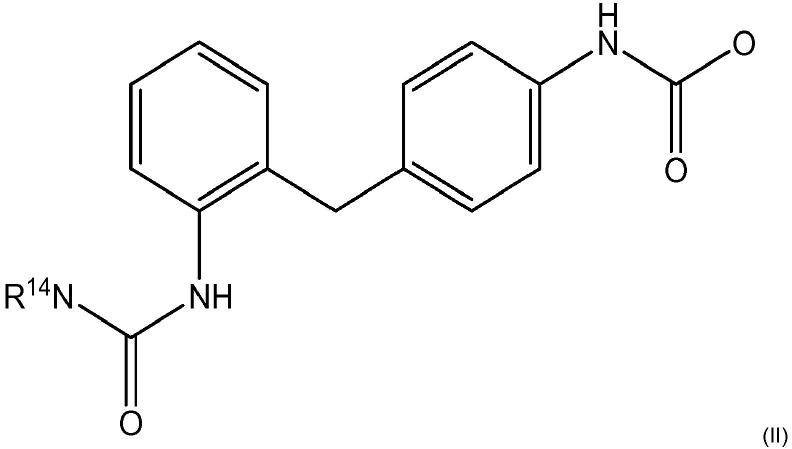 wobei die Bindung zu R⁵ über die Urethangruppe erfolgt und R¹⁴ für Wasserstoff, eine geradkettige oder verzeigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht.

Der Rest R⁵ steht für den divalenten Rest eines hydrophoben Polymers. Unter einem hydrophoben Polymer wird ein im Wesentlichen wasserunlösliches Polymer verstanden. Der Rest R⁵ steht für den divalenten Rest eines Polyalkylenglycols, wie Polypropylenglycol, für den divalenten Rest eines Polytetrahydrofurans, Polyesters, Polyacrylats, Polymethacrylats, Polycyanacrylats, Polystyrols, Polyamids, Polyethers Polyvinylacetats, Polycaprolactams, Polycaprolactons, Polybutadiens, Polyalkylkens wie beispielsweise Polyethylens, Polyvinylchlorids, Polyacrylamids, Polyacrylnitrils, Polyethylenterephthalats, Polycarbonats, Polysulfids, Polyetherketons, Epoxidharzes, Phenolformaldehydharzes, Polyurethans, Polysiloxans oder eines Copolymers aus Monomeren der genannten Polymere, wie beispielsweise für den divalenten Rest eines Ethylen/α-Olefin-Copolymers, Styrol/Butadien-Copolymers, Styrol/Acrylnitril-Copolymers, Ethylen/Vinylacetat-Copolymers. Als Copolymere sind Copolymere beliebiger Architektur aus mindestens 2 verschiedenen, den obigen Polymeren zugrunde liegenden Monomeren, zu verstehen, wie beispielsweise Blockcopolymere, statistische Copolymere oder Gradientencopolymere. Verschiedene Polymerteile, wie beispielsweise die einzelnen Blöcke in Blockcopolymeren können hierbei über divalente organische Verbindungsgruppen verknüpft sein. Als divalente organische Verbindungsgruppen eignen sich unter anderem die oben genannten, als R⁴ und R⁶ definierten Gruppen. In untergeordneter Menge können auch hydrophile Monomere, Oligomere oder Polymere in den Rest R⁵ einpolymerisiert sein, solange die hydrophobe Gesamtcharakteristik des dem Rest R⁵ zugrundeliegenden Polymers erhalten bleibt.

Der Molmassenbereich der zugrunde liegenden Polymere kann in weiten Bereichen variieren und ist im Wesentlichen unbeschränkt. Er richtet sich hauptsächlich nach der Verarbeitbarkeit der Polymere. Hochviskose Polymere können der Verarbeitung beispielsweise auch durch Zusatz geeigneter Lösungsmittel zugänglich gemacht werden.

Die Herstellung derartiger Polymere ist dem Fachmann geläufig und beispielsweise in der DE 199 58 525 A1 beschrieben. Eine Verknüpfung dieser Polymere mit der Silylgruppe bzw. dem Rest R⁷ über die Verbindungsgruppen R⁴ und R⁶ erfolgt üblicherweise über reaktive α,ω-ständige Endgruppen des Polymers. Besitzt das Polymer beispielsweise in α,ω-Steitung OH-Gruppen oder NH₂-Gruppen, so kann dieses beispielsweise mit einer NCO-, Halogenid-, Oxiran-, Säureanhydrid- oder Säurehalogenidgruppe des Silans oder des der Gruppe R⁷ zugrundeliegenden Moleküls oder mit entsprechenden Gruppen der den Verbindungsgliedern R⁴ und R⁶ zugrundeliegenden Verbindungsmolekülen, reagieren.

Bevorzugt ist R⁵ ein divalenter Polyalkylenglycol-Rest, insbesondere Polypropylenglycol-Rest, ein Polyester-Rest oder ein Polytetrahydrofuran-Rest. Die Polyester- und Polytetrahydrofuran-Reste sind insbesondere dann bevorzugt, wenn die mittels der Emulsionen herstellbaren Verklebungen auch auf nichtporösen Substraten hohe Zugscherfestigkeiten besitzen sollen. Im Hinblick auf Langzeitstabilitäten sind die Polyalkylenglycol-basierten Polymere der Formel (I) bevorzugt.

Die erfindungsgemäße Emulsion enthält anionische und/oder nicht-ionische Emulgatoren. Die eingesetzten Emulgatoren müssen zur Herstellung von ÖI-in-Wasser-Emulsionen geeignet sein. Nach dem Römpp-Chemie-Lexikon (9. erweiterte und neubearbeitete Auflage, Georg Thieme Verlag Stuttgart, Bd. 3 (1995), Seite 1812-1813) handelt es sich hierbei im Wesentlichen um Emulgatoren mit einem Hydrophilie-Lipophilie-Balance-Wert (HLB-Wert) von 8 bis 18. Unter einem HLB-Wert wird ein Maß für die Wasser- bzw. Öllöslichkeit von Tensiden verstanden. Der HLB-Wert eines Tensid- oder Emulgatorgemischs lässt sich aus den Werten seiner Bestandteile additiv berechnen. Ausführliche Listen von HLB-Werten von im Handel erhältlichen Emulgatoren finden sich beispielsweise bei Fiedler, Lexikon der Hilfsstoffe für Pharmazie, Kosmetik oder angrenzende Gebiete oder bei Kirk-Othmer (3.) 8, 910-918. Bevorzugt sind in der vorliegenden Erfindung Emulgatoren mit einem HLB-Wert von 8 bis 15.

Beispiele für anionische Emulgatoren sind Alkylsulfate, insbesondere solche mit einer Kettenlänge von etwa 8 bis etwa 18 Kohlenstoffatomen, Alkyl- und Alkarylethersulfate mit etwa 8 bis etwa 18 Kohlenstoffatomen im hydrophoben Rest und 1 bis etwa 40 Ethylenoxid (EO) oder Propylenoxid (PO) Einheiten, oder deren Gemisch, im hydrophilen Teil des Moleküls, Sulfonate, insbesondere Alkylsulfonate, mit etwa 8 bis etwa 18 Kohlenstoffatomen, Alkylarylsulfonate mit etwa 8 bis etwa 18 Kohlenstoffatomen, Tauride, Ester und Halbester der Sulfobernsteinsäure mit einwertigen Alkoholen oder Alkylphenolen mit 4 bis etwa 15 Kohlenstoffatomen, die gegebenenfalls mit 1 bis etwa 40 EO-Einheiten ethoxyliert sein können, Alkali- und Ammoniumsalze von Carbonsäuren, beispielsweise von Fettsäuren oder Harzsäuren mit etwa 8 bis etwa 32 Kohlenstoffatomen oder deren Gemischen, Phosphorsäurepartialester und deren Alkali- und Ammoniumsalze. Als anionische Emulgatoren können jedoch beispielsweise auch Alkyl- und Alkarylphosphate mit etwa 8 bis etwa 22 Kohlenstoffatomen im organischen Rest, Alkylether- oder Alkaryletherphosphate mit etwa 8 bis etwa 22 Kohlenstoffatomen im Alkyl- bzw. Alkarylrest und 1 bis etwa 40 EO-Einheiten eingesetzt werden. Bevorzugt sind die Alkalisalze der Alkylethersulfate. Besonders bevorzugte anionische Emulgatoren sind Disponile (Cognis) der FES Reihe wie beispielsweise 32 IS, 993 IS, 77 IS und 61 IS. Die anionischen Emulgatoren können einzeln oder als Mischungen anionischer Emulgatoren oder Mischungen mit nichtionischen Emulgatoren eingesetzt werden.

Beispiele für nichtionische Emulgatoren sind Polyvinylalkohol, der beispielsweise noch 5 bis etwa 50%, beispielsweise etwa 8 bis etwa 20% Acetateinheiten und einen Polymerisationsgrad von etwa 200 bis etwa 5.000 aufweist, Alkylpolyglykolether, vorzugsweise solche mit etwa 8 bis etwa 40 EO-Einheiten und Alkylresten mit etwa 8 bis etwa 20 Kohlenstoffatomen, Alkylarylpolyglykolether, vorzugsweise solche mit etwa 8 bis etwa 40 EO-Einheiten und etwa 8 bis etwa 20 Kohlenstoffatomen in den Alkyl- oder Arylresten, Ethylenoxid/Propylenoxid (EO/PO)-Blockcopolymere, vorzugsweise solche mit etwa 8 bis etwa 40 EO- bzw. PO-Einheiten, Additionsprodukte von Alkylaminen mit Alkylresten von etwa 8 bis etwa 22 C- Atomen mit Ethylenoxid oder Propylenoxid, Fett- und Harzsäuren mit etwa 6 bis etwa 32 Kohlenstoffatomen, Alkylpolyglykoside mit linearen oder verzweigten, gesättigten oder ungesättigten Alkylresten mit im Mittel etwa 8 bis etwa 24 Kohlenstoffatomen und einem Oligoglykosidrest mit etwa 1 bis etwa 10 Hexose- oder Pentoseeinheiten im Mittel oder Gemische aus zwei oder mehr davon, Naturstoffe und deren Derivate wie Lecithin, Lanolin, Sarkosin, Cellulose, Cellulosealkylether und Carboxyalkylcellulosen, deren Alkylgruppen jeweils 1 bis etwa 4 Kohlenstoffatome aufweist, polare Gruppen enthaltende lineare Organo(poly)siloxane, insbesondere solche mit Alkoxygruppen mit bis zu etwa 24 Kohlenstoffatomen und bis zu etwa 40 EO- oder PO-Gruppen. Besonders bevorzugte nichtionische Emulgatoren sind die alkoxylierten, insbesondere ethoxylierten Fettalkohole. Die nichtionischen Emulgatoren können einzeln oder als Mischungen nichtionischer Emulgatoren oder Mischungen mit anionischen Emulgatoren eingesetzt werden.

In einer bevorzugten Ausführungsform der vorliegenden Erfindung werden die folgenden Emulgatoren eingesetzt: die Alkalisalze, insbesondere das Na-Salz der C_{12/14}-Fettalkoholethersulfate, Alkylphenolethersulfate, insbesondere deren Alkali- oder NH₄-Salze, Na-n-Dodecylsulfat, Di-K-Ölsäuresulfonat (C₁₈), Na-n-alkyl- (C₁₀C₁₃)-benzolsulfonat, Na-2-Ethylhexylsulfat, NH₄-Laurylsulfat (C_{8/14}), Na- Laurylsulfat (C_{12/14}). Na-Laurylsulfat (C_{12/16}). Na-Laurylsulfat (C_{12/18}), Na- Cetylstearylsulfat (C_{16/18}), Na-Oleylcetylsulfat (C_{16/18}), Nonylphenolethoxylate, Octylphenolethoxylate, C_{12/14}-Fettalkoholethoxylate, Oleylcetylethoxylate, C_{16/18}- Fettalkoholethoxylate, Cetylstearylethoxylate, ethoxylierte Triglyceride, Sorbitanmonolaurat, Sorbitanmonooleat, Sorbitan-20EO-monooleat, Sorbitan- 20EO-monostearat, Sulfobernsteinsäuremonoester-di-Na-Salz, Fettalkoholsulfosuccinat-di-Na-Salz, Dialkylsulfosuccinat-Na-Salz oder Di-Na- Sulfosuccinamat oder Gemische aus zwei oder mehr davon. Ebenfalls einsetzbar sind Gemische aus an- und nichtionischen Tensiden, Gemische nichtionischer Tenside, Alkylaryletherphosphate und deren saure Ester, Dihydroxystearinsäure-NH₄-Salz, Iso-Eicosanol, Arylpolyglykolether, Glycerinmonostearat. Besonders bevorzugte nichtionische Emulgatoren sind Disponile (Cognis) der A Reihe z.B. 3065 und 4065.

Ganz besonders bevorzugt ist der Einsatz nicht-ionischer Emulgatoren oder einer Mischung eines oder mehrerer anionischer Emulagtoren mit einem oder mehreren nicht-ionischen Emulgatoren.

Eine besonders bevorzugte Gruppe unter den nicht-ionischen Emulgatoren kann durch die allgemeine Formel (III) 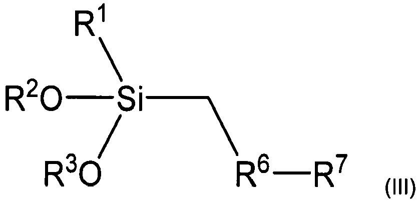 dargestellt werden, worin R¹ eine geradkettige oder verzweigte Alkylgruppe oder Alkoxygruppe mit 1 bis 4 Kohlenstoffatomen ist, R² und R³ unabhängig voneinander eine geradkettige oder verzweigte Alkylgruppe mit 1 bis 4 Kohlenstoffatomen sind, R⁶ eine divalente organische Verbindungsgruppe ist; und R⁷ für einen Rest steht, welcher der Verbindung der allgemeinen Formel (III) die Eigenschaft verleiht in Wasser als Öl-In-Wasser-Emulgator zu wirken.

Vorzugsweise steht R⁷ für einen Rest, der sich von einer Verbindung ableitet, die einen HLB-Wert von 8 bis 18, vorzugsweise 8 bis 15 besitzt. Besonders bevorzugt steht R⁷ für einen Rest - [Propylenoxy]ₙ[Ethylenoxy]ₘ-R⁸, wobei n, m und R⁸ so gewählt sind, dass der HLB-Wert des entsprechenden Amins H₂N-[Propylenoxy]ₙ[Ethylenoxy]ₘ-R⁸ 8 bis 15 beträgt, und R⁸ ein aliphatischer Rest, eine Hydroxy-Gruppe oder eine Amino-Gruppe ist. Ein zur Herstellung des Emulgators der allgemeinen Formel (III) geeignetes Amin der Formel H₂N-[Propytenoxy]ₙ[Ethylenoxy]ₘ-R⁸ ist beispielweise das Jeffamin M2070 (Huntsman; n=10, m=31, R⁸=Methyl) mit einem HLB-Wert von 13.

Da diese Emulgatoren bei der Aushärtungsreaktion der Klebstoffe, Dichtmassen und Beschichtungsmittel durch teilweise oder vollständige Hydrolyse der Alkoxygruppen in das härtende Netzwerk einbaubar sind kann man diese als Reaktivemulgatoren bezeichnen. Der Einsatz von Reaktiv-Emulgatoren ist insbesondere bei Verwendung Polyester- und Polytetrahydrofuran-basierter Polymere der Formel (I) bevorzugt, wenngleich keine Beschränkung auf diese Systeme besteht.

Der Emulgatorgehalt der erfindungsgemäßen Emulsionen ist vorzugsweise kleiner als 25 Gew.-%, bevorzugter kleiner als 20 Gew.-% besonders bevorzugt kleiner als 15 Gew.-% bezogen auf das Gesamtgewicht der Emulsion.

Der Emulatoranteil der Emulsion kann in einer bevorzugten Ausführungsform der Erfindung Null betragen, wenn es sich beim eingesetzten Polymer der allgemeinen Formel (I) um ein Polymer handelt, bei welchem der Rest R⁷ für einen Rest steht, der dem Polymer der allgemeinen Formel (I) die Eigenschaft verleiht in Wasser unter Bildung einer Öl-In-Wasser-Emulsion selbst zu emulgieren.

Vorzugsweise steht R⁷ in Formel (I) für einen Rest, der sich von einer Verbindung ableitet, die einen HLB-Wert von 8 bis 18, vorzugsweise 8 bis 15 aufweist. Besonders bevorzugt steht R⁷ in Formel (I) für einen Rest -[Propylenoxy]ₙ[Ethylenoxy]ₘ-R⁸, wobei n, m und R⁸ so gewählt sind, dass der HLB-Wert des entsprechenden Amins H₂N-[Propylenoxy]ₙ[Ethylenoxy]ₘ-R⁸ einen Wert von 8 bis 15 besitzt, und R⁸ ein aliphatischer Rest, eine Hydroxy-Gruppe oder eine Amino-Gruppe ist. Emulsionen die ein Polymer mit einem derartigen Rest R⁷ enthalten besitzen im Allgemeinen selbstemulgierende Eigenschaften und benötigen zumeist keine weiteren anionischen und/oder nichtionischen Emulgatoren.

Die vorliegende Erfindung stellt daher auch α-silyl-terminierte Polymere der allgemeinen Formel (I) bereit: 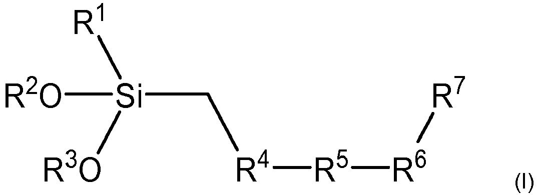 worin R¹ eine geradkettige oder verzweigte Alkylgruppe oder Alkoxygruppe mit 1 bis 4 Kohlenstoffatomen ist, R² und R³ unabhängig voneinander eine geradkettige oder verzweigte Alkylgruppe mit 1 bis 4 Kohlenstoffatomen sind, R⁴ und R⁶ unabhängig voneinander, divalente organische Verbindungsgruppen sind, wobei R⁴ und R⁶ für einen Rest -NR⁹-(CO)-R¹⁰- stehen, wobei der Rest R¹⁰ an R⁵ gebunden ist, und R⁹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und R¹⁰ für eine Einfachbindung oder einen Rest -NR¹¹-R¹²- steht, wobei der Rest R¹² an R⁵ gebunden ist, und R¹¹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und R¹² für eine Gruppe -R¹³-(NH)ᵣ-(CO)- Gruppe mit r = 0 oder 1 steht, worin R¹³ für eine Alkylaryl-Gruppe mit 6 bis 11 Kohlenstoffatomen, eine Aralkylgruppe mit 6 bis 11 Kohlenstoffatomen oder eine Arylgruppe mit 5 bis 10 Kohlenstoffatomen steht, wobei die CO-Gruppe an R⁵ verbunden ist, R⁵ ein hydrophobes divalentes Polymerrückgrat ist; und R⁷ für einen Rest -[Propylenoxy]ₙ[Ethylenoxy]ₘ-R⁸ steht, wobei n, m und R⁸ so gewählt sind, dass der HLB-Wert des entsprechenden Amins H₂N-[Propylenoxy]ₙ[Ethylenoxy]ₘ-R⁸ einen Wert von 8 bis 15 besitzt, und R⁸ ein aliphatischer Rest, eine Hydroxy-Gruppe oder eine Amino-Gruppe ist.

In einer besonders bevorzugten Ausführungsform der Erfindung wird eine Emulsion sowie das darin enthaltene Polymer der allgemeinen Formel (I) bereitgestellt, wobei R¹ für Methyl, Ethyl, Methoxy oder Ethoxy steht, und R² und R³ unabhängig voneinander für Methyl oder Ethyl stehen, R⁴ und R⁶ unabhängig voneinander, divalente organische Verbindungsgruppen sind, wobei R⁴ und R⁶ für einen Rest -NR⁹-(CO)-R¹⁰- stehen, wobei der Rest R¹⁰ an R⁵ gebunden ist, und R⁹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und R¹⁰ für ein Einfachbindung oder einen Rest -NR¹¹-R¹²- steht, wobei der Rest R¹² an R⁵ gebunden ist, und R¹¹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und R¹² für eine Gruppe -R¹³-(NH)ᵣ-(CO)- Gruppe mit r = 0 oder 1 steht, worin R¹³ für eine Alkylaryl-Gruppe mit 6 bis 11 Kohlenstoffatomen, eine Aralkylgruppe mit 6 bis 11 Kohlenstoffatomen oder eine Arylgruppe mit 5 bis 10 Kohlenstoffatomen steht, wobei die CO-Gruppe an R⁵ verbunden ist, R⁵ ein divalenter Polytetrahydrofuran- oder Polyester-Rest ist und R⁷ für einen Rest -[Propylenoxy]ₙ[Ethylenoxy]ₘ-R⁸ steht, wobei n, m und R⁸ so gewählt sind, dass der Hydrophilie-Lipophilie-Balance-Wert des entsprechenden Amins H₂N-[Propylenoxy]ₙ[Ethylenoxy]ₘ-R⁸ einen Wert von 8 bis 15 besitzt, und R⁸ ein aliphatischer Rest, eine Hydroxy-Gruppe oder eine Amino-Gruppe ist.

Die erfindungsgemäße Emulsion besitzt einen pH-Wert von 2 bis 11. Vorzugsweise, insbesondere um das Substrat nicht zu schädigen, wird ein pH-Wert von 3 bis 10, bevorzugter 4 bis 9 und noch bevorzugter im leicht saueren Bereich von 4 bis 6 oder 7 eingestellt. Insbesondere bei der Herstellung lagerstabiler, selbstemulgierende Polymere und/oder Reaktivemulatoren enthaltender Systeme hat sich ein pH-Wert von 4 bis 7, besser noch 4 bis 6 als vorteilhaft herausgestellt. Der pH-Wert kann beispielsweise unter Verwendung herkömmlicher Puffersubstanzen stabilisiert werden und mit organischen oder anorganischen Säuren und Basen eingestellt werden.

Die erfindungsgemäßen Emulsionen können zusätzlich zu obligatorischen Verbindungen der allgemeinen Formel (I) und den nicht-ionischen und/oder anionischen Emulgatoren eine oder mehrere Komponenten als Zusatzstoffe enthalten, die gegebenenfalls auch zum Feststoffgehalt von 40 bis 95 Gew.-%, vorzugsweise 50 bis 95 Gew.-%, besonders bevorzugt 70 bis 95 oder 80 bis 95 Gew.-% beitragen können. Zu diesen gehören beispielsweise Füllstoffe, Pigmente, Schutzkolloide, pH-Regler wie beispielsweise organische und anorganische Säuren und Basen, Puffersubstanzen, Haftvermittler wie beispielsweise niedermolekulare Silane, Tackifier, Katalysatoren, Filmbildner, Weichmacher, Redoxstabiliatoren, UV-Stabilisatoren oder Mittel zur Viskositätsbeeinflussung. Da die genannten Zusatzstoffe unterschiedlichste Zusammensetzungen aufweisen können, werden, um die Stabilität der erfindungsgemäßen Emulsionen nicht zu beeinträchtigen üblicherweise solche ausgewählt, die sich möglichst inert gegenüber den zwingenden Emulsionsbestandteilen verhalten.

Die erfindungsgemäße Emulsion kann daher bis zu etwa 70 Gew.-%, beispielsweise etwa 30 Gew.-%, an Füllstoffen enthalten. Als Füllstoffe geeignet sind beispielsweise gegenüber Silanen inerte anorganische Verbindungen wie Titandioxid, Kreide, Kalkmehl, gefällte Kieselsäure, pyrogene Kieselsäure, Zeolithe, Bentonite, gemahlene Mineralstoffe, Glaskugeln, Glasmehl, Glasfasern und Glasfaserkurzschnitte sowie weitere, dem Fachmann bekannte anorganische Füllstoffe, sowie organische Füllstoffe, insbesondere Faserkurzschnitte oder Kunststoffhohlkugeln. Gegebenenfalls können Füllstoffe eingesetzt werden, die der Zubereitung Thixotropie verleihen, beispielsweise quellbare Kunststoffe wie PVC.
In einer besonderen Ausführungsform können auch oberflächenmodifizierte Füllstoffe eingesetzt werden.

Als Pigmente sind generell alle organischen und anorganischen Pigmente einsetzbar, sofern sie die Emulsion nicht durch Interaktion mit den Emulsionsbestandteilen destabilisieren. Beispielsweise kann feinteiliges Silica (Aerosile, wie R202, Aeroxide, wie T05 oder Sipernate, wie S22) eingesetzt werden.

Als Schutzkolloide können beispielsweise Polyvinylalkohole (wie Mowiole z.B. 5-88 oder 4-88), Methylcellulose und Methylcellulosederivate (wie Culminal) oder Polyvinvlpyrrolidone und Copolymere derselben mit Vinylacetat (wie Luviskole z.B. VA64) eingesetzt werden.

Als pH-Regler sind grundsätzlich alle anorganischen und organischen Säuren und Basen geeignet, welche die Stabilität der erfindungsgemässen Emulsion nicht nachteilig beeinflussen. Zur Einstellung basischer pH-Werte (pH-Wert > 7) ist beispielsweise Natriumhydrogencarbonat oder Natriumhydroxid geeignet, die Einstellung saurer pH-Werte (pH-Wert < 7) wird beispielsweise mit Salzsäure durchgeführt. Die erfindungsgemässe Emulsion enthält die pH-Regler gegebenenfalls in einer Menge von bis zu etwa 10 Gew.-%, beispielsweise etwa 1 bis etwa 5 Gew.-% oder etwa 0,01 bis etwa 1 Gew.-%, bezogen auf die gesamte Emulsion.

Darüber hinaus können übliche Puffersysteme, wie beispielweise Phosphatpuffer- oder Citratpuffer-Systeme eingesetzt werden.

Als Haftvermittler eignen sich beispielsweise niedermolekulare Silane mit einem Molekulargewicht von weniger als etwa 200, die eine oder mehrere Silangruppen aufweisen.

Die erfindungsgemässe Zubereitung kann, bis zu etwa 50 Gew.-% an üblichen Tackifiern enthalten. Als Tackifier geeignet sind beispielsweise Harze, Terpen- Oligomere, Cumaron-/Inden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich Pinen, Dipenten oder Limonen gewonnen werden. Die Polymerisation dieser Monomeren erfolgt in der Regel kationisch unter Initiierung mit Friedel-Crafts-Katalysatoren. Zu den Terpenharzen werden beispielsweise auch Copolymere aus Terpenen und anderen Monomeren, beispielsweise Styrol, α-Methylstyrol, Isopren und dergleichen, gerechnet. Die genannten Harze finden beispielsweise als Tackifier für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Zusatzstoff im oben genannten Sinne geeignet sind die Kolophoniumharze und deren Derivate, beispielsweise deren Ester oder Alkohole. Weitere Beispiele finden sich in der WO 93/23490

Die erfindungsgemäße Zubereitung kann weiterhin bis zu etwa 10 Gew.-% Katalysatoren zur Steuerung der Härtungsgeschwindigkeit enthalten. Als Katalysatoren geeignet sind beispielsweise metallorganische Verbindungen wie Eisen- oder Zinnverbindungen geeignet, insbesondere die 1,3-Dicarbonylverbindungen des Eisens oder des 2- bzw. 4-wertigen Zinns, insbesondere die Sn(II)-Carboxylate bzw. die Dialkyl-Sn-(IV)-Dicarboxylate oder die entsprechenden Dialkoxylate, beispielsweise Dibutylzinndilaurat, Dibutylzinndiacetat, Dioctylzinndiacetat, Dibutylzinnmaleat, Zinn(II)octoat, Zinn(II)phenolat oder die Acetylacetonate des 2- bzw. 4-wertigen Zinns.

Als Weichmacher geeignet sind beispielsweise Ester wie Abietinsäureester, Adipinsäureester, Azelainsäureester, Benzoesäureester, Buttersäureester, Essigsäureester, Ester höherer Fettsäuren mit etwa 8 bis etwa 44 Kohlenstoffatomen, Ester OH-Gruppen tragender oder epoxidierter Fettsäuren, Fettsäureester und Fette, Glykolsäureester, Phosphorsäureester, Phthalsäureester, von 1 bis 12 Kohlenstoffatomen enthaltenden linearen oder verzweigten Alkoholen, Propionsäureester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester der difunktionellen, aliphatischen Dicarbonsäuren, beispielsweise das Veresterungsprodukt von Adipinsäuremonooctylester mit 2-Ethylhexanol (Edenol DOA, Fa. Henkel, Düsseldorf). Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Henkel, Düsseldorf). Des weiteren können als Weichmacher endgruppenverschlossene Polyethylenglykole oder Diurethane eingesetzt werden.

Die erfindungsgemässe Zubereitung kann weiterhin bis zu etwa 10 Gew.-%, insbesondere bis zu etwa 1 Gew.-% Redoxstabilisatoren bzw. Antioxidantien enthalten.

Die erfindungsgemässe Zubereitung kann bis zu etwa 5 Gew.-%, beispielsweise etwa 1 Gew.-% an UV-Stabilisatoren enthalten. Als UV-Stabilisatoren besonders geeignet sind die sogenannten Hindered Amine Light Stabilisators (HALS). Es ist im Rahmen der vorliegenden Erfindung möglich, dass die erfindungsgemässe Zubereitung einen UV-Stabilisator enthält, der eine Silangruppe trägt und beim Vernetzen bzw. Aushärten in das Endprodukt eingebaut wird. Hierzu besonders geeignet sind die Produkte Lowilite 75, Lowilite 77 (Fa. Great Lakes, USA).

Die vorliegende Erfindung stellt auch ein Verfahren zur Herstellung der erfindungsgemäßen Emulsionen zur Verfügung, wobei zunächst eine Mischung eines oder mehrerer Polymere der allgemeinen Formel (I) 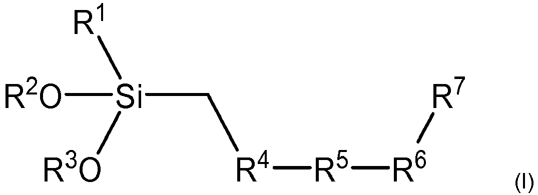 worin R¹ eine geradkettige oder verzweigte Alkylgruppe oder Alkoxygruppe mit 1 bis 4 Kohlenstoffatomen ist, R² und R³ unabhängig voneinander eine geradkettige oder verzweigte Alkylgruppe mit 1 bis 4 Kohlenstoffatomen sind, R⁴ und R⁶ unabhängig voneinander, divalente organische Verbindungsgruppen sind, wobei R⁴ und R⁶ für einen Rest -NR⁹-(CO)-R¹⁰- stehen, wobei der Rest R¹⁰ an R⁵ gebunden ist, und R⁹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und R¹⁰ für eine Einfachbindung oder einen Rest -NR¹¹-R¹²- steht, wobei der Rest R¹² an R⁵ gebunden ist, und R¹¹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und R¹² für eine Gruppe -R¹³-(NH)ᵣ-(CO)- Gruppe mit r = 0 oder 1 steht, worin R¹³ für eine Alkylaryl-Gruppe mit 6 bis 11 Kohlenstoffatomen, eine Aralkylgruppe mit 6 bis 11 Kohlenstoffatomen oder eine Arylgruppe
mit 5 bis 10 Kohlenstoffatomen steht, wobei die CO-Gruppe an R⁵ verbunden ist, R⁵ ein hydrophober divalenter Polymer-Rest ist; und R⁷ ein Rest CH₂SiR¹(OR²)(OR³) ist, worin R¹, R² und R³ obige Bedeutung besitzen oder oder R⁷ für einen Rest steht, der dem Polymer der allgemeinen Formel (I) die Eigenschaft verleiht in Wasser unter Bildung einer Öl-In-Wasser-Emulsion selbst zu emulgieren;
mit einem oder mehreren anionischen und/oder nicht-ionischen Emulgatoren, die zur Bildung einer ÖI-in-Wasser-Emulsion befähigt sind; und wobei, für den Fall, dass R⁷ für einen Rest steht, der dem Polymer der allgemeinen Formel (I) die Eigenschaft verleiht in Wasser unter Bildung einer Öl-In-Wasser-Emulsion selbst zu emulgieren,
zumindest ein Teil des Emulgators oder der Emulgatoren durch Polymere der Formel (I) ersetzt sind, hergestellt wird.

In einem weiteren Schritt werden dieser Mischung die wässrigen Emulsionsbestandteile zugemischt, wobei ein pH-Wert von 2 bis 11, vorzugsweise 3 bis 10, bevorzugter 4 bis 9 und noch bevorzugter 4 bis 6 oder 7 und ein Feststoffgehalt von 40 bis 95 Gew.-%, bezogen auf das Gesamtgewicht der Emulsion eingestellt wird. Es entsteht hierbei eine lagerstabile ÖI-in-Wasser-Emulsion.

Bei der Mischung des oder der Polymere der Formel (I) mit dem Emulgator bzw. Emulgatorgemisch können weitere nicht-wässrige Bestandteile zugegen sein. Entscheidend ist, dass die wässrigen Bestandteile, wie Wasser, Puffer oder wässrige pH-Regler erst nach Vermischen des Polymers oder der Polymere der Formel (I) mit dem Emulgator oder den Emulgatoren zugefügt werden.

Als Lagerstabilität wird in der vorliegenden Erfindung die Eigenschaft der erfindungsgemäßen Emulsionen verstanden bei einer Temperatur von 23 °C mindestens 1 Woche, vorzugsweise mindestens 2 Wochen ohne Entmischung lagerfähig zu sein und nach der Lagerung Klebeverbunde zu erzeugen, die verglichen mit der Herstellung eines Klebeverbunds direkt nach Herstellung der Emulsion eine Zugscherfestigkeit aufweisen, die mindestens 20 % der Zugscherfestigkeit ohne Lagerung entspricht. Üblicherweise zeigen die erfindungsgemäßen Emulsionen jedoch beträchtlich längere Lagerstabilitäten (keine Entmischung nach Zeiträumen von 4 bis 6 Monaten) bei deutlich höheren Temperaturen (40 °C). Üblicherweise beträgt der Wert der Zugscherfestigkeit von Klebeverbunden, die mit mehrwöchig (beispielsweise 2 Wochen) gelagerten Emulsionen hergestellt wurden, mehr als 30 %, meist mehr als 50 % des Werts ohne Lagerung der Emulsion.

In einem weiteren Aspekt stellt die Erfindung die Verwendung der erfindungsgemäßen Emulsionen zur Herstellung von Klebstoffen, Dichtmassen, Beschichtungsmitteln und polymere Formmassen oder als Klebstoffe, Dichtmassen, Beschichtungsmittel und polymere Formmassen bereit. Bevorzugt ist insbesondere die Verwendung von solchen Emulsionen für die genannten Zwecke, die das erfindungsgemäße selbstemulgierende α-silyl-terminierte Polymer und/oder den erfindungsgemäßen Reaktiv-Emulgator enthalten.

Die erfindungsgemässen Emulsionen sind für ein breites Feld von Anwendungen im Bereich der Oberflächenbeschichtungen, Kleb- und Dichtstoffe geeignet. Besonders geeignet sind die erfindungsgemässen Emulsionen beispielsweise als Kontaktklebstoff, 1K-Klebstoff, 2K-Klebstoff, Montageklebstoff, Sprühklebstoff, Klebestift, Dichtmasse, insbesondere Fugendichtmasse, und zur Oberflächenversiegelung.

Gegenstand der Erfindung ist daher auch die Verwendung der erfindungsgemässen Emulsionen als Klebstoff, Dichtmasse, Oberflächenbeschichtungsmittel, und polymere Formmassen oder zur Herstellung von Formteilen.

Die erfindungsgemässen Emulsionen und die erfindungsgemäßen selbstemulgierenden α-silyl-terminierten Polymere sind beispielsweise als Klebstoff für Kunststoffe, Metalle, Spiegel, Glas, Keramik, mineralische Untergründe, Holz, Leder, Textilien, Papier, Pappe und Gummi geeignet, wobei die Materialien jeweils mit sich selbst oder beliebig untereinander verklebt werden können.

Im Rahmen einer Ausführungsform der Erfindung werden die erfindungsgemässen Emulsionen beispielsweise als Sprühkleber formuliert. Hierzu wird die erfindungsgemässe Zubereitung zusammen mit einem entsprechenden Treibmittel in eine entsprechende Sprühkartusche eingebracht.

Im Rahmen einer weiteren bevorzugten Ausführungsform der vorliegenden Erfindung werden die erfindungsgemässen Emulsionen als Klebestift formuliert. Hierzu werden den erfindungsgemässen Emulsionen entsprechende Verdickungsmittel zugemischt. Geeignete Verdickungsmittel sind beispielsweise Carbopol 672 (BF Goodrich), Softisan Gel (Contensio), Aerosil (Degussa), Sipernat (Degussa), Rilanit HT extra (Henkel), Rilanit spez. micro. (Henkel), Cutina HR (Henkel), GENUVISCO carrageen TPH-1 (Hercules), Klucel MF (Hercules), Millithix 925 (Milliken), Rheolate 204 (Rheox), Disorbene LC (Roquette), Disorbene M (Roquette), Permutex RM 4409 (Stahl), Stockosorb (Stockhausen), FAVOR PAC 230 (Stockhausen), T 5066 (Stockhausen), Wacker HDK H2000 (Wacker) und Wacker HDK V 15 (Wacker).

Weiterhin eignen sich die erfindungsgemässen Emulsionen und die erfindungsgemäßen selbstemulgierenden α-silyl-terminierten Polymere beispielsweise als Dichtstoff für Kunststoffe, Metalle, Spiegel, Glas, Keramik, mineralische Untergründe, Holz, Leder, Textilien, Papier, Pappe und Gummi, wobei die Materialien jeweils mit sich selbst oder beliebig gegeneinander abgedichtet werden können.

Die erfindungsgemässen Emulsionen und die erfindungsgemäßen selbstemulgierenden α-silyl-terminierten Polymere können beispielsweise auch als Oberflächenbeschichtungsmittel für Oberflächen aus Kunststoff, Metall, Glas, Keramik, mineralischen Materialien, Holz, Leder, Textilien, Papier, Pappe und Gummi verwendet werden.

Die erfindungsgemässen Emulsionen und die erfindungsgemäßen selbstemulgierenden α-silyl-terminierten Polymere sind weiterhin zur Herstellung von Formteilen beliebiger Raumform geeignet.

Ein weiteres Anwendungsgebiet für die erfindungsgemässen Emulsionen und die erfindungsgemäßen selbstemulgierenden α-silyl-terminierten Polymere ist die Verwendung als Dübel-, Loch- oder Rißspachtelmasse.

Ein weiterer Gegenstand der Erfindung sind ein Klebstoff, ein Oberflächenbeschichtungsmittel oder eine Dichtmasse, hergestellt unter Verwendung einer erfindungsgemässen Emulsion.

### BEISPIELE

### Herstellung des Polymers A

1530 g Acclaim Polyol 18200 N (Polypropylenglykol mit einer OH-Zahl von 5,5) wurden bei 60°C und 0,6 mbar für 30 Minuten entwässert. Anschließend wurde mit Stickstoff belüftet und unter Stickstoff-Überleitung 0,3 g Tinstab BL 277 (=DBTL, Dibutylzinndilaurat) und anschließend 25,28 g Geniosil XL 42 (Isocyanatomethyldimethoxy(methyl)silan) zugegeben. Es wurde 1 Stunde bei 80°C bis zur quantitativen Umsetzung nachgerührt. Polymer A wurde noch heiß in Kunststoffkartuschen luftdicht abgefüllt. Die Schmelzviskosität bei 80°C beträgt 4,0 Pa·s (Methode Kegel/Platte, Brookfield CAP 2000 Viscometer, Cone 6, 50 Upm, 25 Sek.).

### Herstellung des Polymers B

650,40 g PE (Liofol Polyester 218) wurden bei 60°C und 1,2 mbar für 45 Minuten entwässert. Anschließend wurde mit Stickstoff belüftet und unter Stickstoff-Überleitung 400 g Lupranat MCI (Diphenylmethan-2,4'-diisocyanat) zugegeben. Nach 60 Minuten wurde auf 60 °C abgekühlt. Anschließend wurde 345,50 g Geniosil XL 973 (N-Phenylaminomethyltrimethoxysilan) zugegeben. Es wurde 1 Stunde bei 80°C bis zur quantitativen Umsetzung nachgerührt. Polymer B wurde noch heiß in Kunststoffkartuschen luftdicht abgefüllt. Die Schmelzviskosität bei 80°C beträgt 4,6 Pa·s (Methode Kegel/Platte, Brookfield CAP 2000 Viscometer, Cone 6, 50 Upm, 25 Sek.).

### Herstellung des Polymers C

409,14 g PTHF 650 (Polytetrahydrofuran mit einer OH-Zahl von 175, erhältlich von BASF) wurden bei 80°C und 3 mbar für 60 Minuten unter Argonzuleitung entwässert. Anschließend wurde mit Argon belüftet und auf 60 °C abkühlen gelassen. Unter Argon-Überleitung wurden 319,07 g Lupranat MCI (Diphenylmethan-2,4'-diisocyanat) zugegeben. Es wurde 10 Minuten auf eine Temperatur von 75 °C erhitzt. Nach Abklingen der exothermen Reaktion wurde 110 Minuten bei 75 °C nachgerührt. Anschließend wurde bei einer Temperatur von 70 °C unter Argon 275,60 g Geniosil XL 973 (N-Phenylaminomethyltrimethoxysilan) zugegeben. Es wurde bei 80 °C bis zur quantitativen Umsetzung nachgerührt. Polymer C wurde in Kartuschen abgefüllt. Die Schmelzviskosität bei 80°C beträgt 3,4 Pa·s (Methode Kegel/Platte, Brookfield CAP 2000 Viscometer, Cone 6, 50 Upm, 25 Sek.).

### Herstellung des Polymers D

59,86 g PTHF 650 (Polytetrahydrofuran mit einer OH-Zahl von 179, erhältlich von BASF) und 24,69 g PEG 600 (Clariant Polyethylenglycol 600 PU) mit einer OH-Zahl von 186) wurden bei 80°C und 3 mbar für 60 Minuten unter Argonzuleitung entwässert. Anschließend wurde mit Argon belüftet und auf 58 °C abkühlen gelassen. Unter Argon-Überleitung wurden 68,21 g Lupranat MCI (Diphenylmethan-2,4'-diisocyanat) zugegeben. Nach Abklingen der exothermen Reaktion wurde auf eine Temperatur von 80 °C für 80 Minuten erhitzt. Anschließend wurden bei einer Temperatur von 60 °C unter Argon 50,26 g Wacker SL 449025 (N-Phenylamino-methyldimethoxy(methyl)silan) und 4,85 g Geniosil XL 973 (N-Phenylamino-methyltrimethoxysilan) zugegeben. Es wurde bei 75 °C bis zur quantitativen Umsetzung nachgerührt. Polymer D wurde unter Argon in Tuben abgefüllt.

### Herstellung des Polymers E

150 g PE (Liofol Polyester 218) und 50 g Jeffamin M-2070 (Methoxy-poly(oxyethylen/oxypropylen)-2-propylamin) wurden bei 60°C und 0,8 mbar für 30 Minuten entwässert. Anschließend wurde mit Stickstoff belüftet und unter Stickstoff-Überleitung 98,05 g Lupranat MCI (Diphenylmethan-2,4'-diisocyanat) zugegeben. Nach 60 Minuten wurde auf 60 °C abgekühlt. Anschließend wurde 84,69 g Geniosil XL 973 (N-Phenylaminomethyltrimethoxysilan) zugegeben. Es wurde 1 Stunde bei 80°C bis zur quantitativen Umsetzung nachgerührt. Polymer E wurde noch heiß in beschichtete Aluminiumtuben abgefüllt. Die Schmelzviskosität bei 80°C beträgt 2,7 Pa·s (Methode Kegel/Platte, Brookfield CAP 2000 Viscometer, Cone 6, 50 Upm, 25 Sek.).

### Herstellung des Polymers F

95,16 g PTHF 650 (Polytetrahydrofuran mit einer OH-Zahl von 174, erhältlich von BASF) und 30 g Jeffamin M-2070 (Methoxy-poly(oxyethylen/oxypropylen)-2-propylamin, erhältlich von Huntsman) wurden bei 80°C und 3 mbar für 60 Minuten unter Argonzuleitung entwässert. Anschließend wurde mit Argon belüftet und auf 78 °C abkühlen gelassen. Unter Argon-Überleitung wurden 77,57 g Lupranat MCI (Diphenylmethan-2,4'-diisocyanat) zugegeben. Nach Abklingen der exothermen Reaktion wurde bei einer Temperatur von 80 °C für 110 Minuten erhitzt. Anschließend wurde bei einer Temperatur von 70 °C unter Argon 66,97 g Geniosil XL 973 (N-Phenylaminomethyltrimethoxysilan) zugegeben. Es wurde bei einer Temperatur von 80 °C bis zur quantitativen Umsetzung (ca. 2 Stunden) nachgerührt. Polymer F wurde unter Argon in Tuben abgefüllt. Die Schmelzviskosität bei 80°C beträgt 1,6 Pa·s (Methode Kegel/Platte, Brookfield CAP 2000 Viscometer, Cone 6, 50 Upm, 25 Sek.).

### Herstellung des (Reaktiv)-Emulgators I

199,81 g Jeffamin M-2070 (Methoxy-poly(oxyethylen/oxypropylen)-2-propylamin, 10PO/31EO, erhältlich von Huntsman,) und 16,26 g Geniosil XL 42 (Isocyanatomethyldi-methoxy(methyl)silan) wurden unter Argonzuleitung bei Raumtemperatur eingewogen. Bei einer Temperatur von 80 °C wurde 240 Minuten nachgerührt. Das Produkt I wurde unter Argon in Tuben gefüllt. Die Schmelzviskosität bei 80°C beträgt 0,9 Pa·s (Methode Kegel/Platte, Brookfield CAP 2000 Viscometer, Cone 6, 50 Upm, 25 Sek.).

**Tabelle 1: Polymere der allgemeinen Formel (I):**

| | | | | | | |
|---|---|---|---|---|---|---|
| 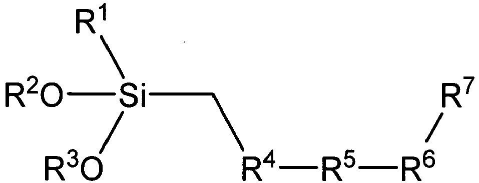 | | | | | | |

| Polymer | R¹ | R²/R³ | R⁴ | R⁵ | R⁶ | R⁷ |
|---|---|---|---|---|---|---|
| A | Me | MeO | NH-CO | PPG | OC-NH | CH₂SiMe(OMe)₂ |
| B | MeO | MeO | N(Ph)-CO-NH-oPh-CH₂-pPh-NH-CO | PE | OC-NH-pPh-CH₂-oPh-NH-CO-NH | CH₂Si(OMe)₃ |
| C | MeO | MeO | N(Ph)-CO-NH-oPh-CH₂-pPh-NH-CO | PTHF | OC-NH-pPh-CH₂-oPh-NH-CO-N H | CH₂Si(OMe)₃ |
| D | Me/ MeO | MeO | N(Ph)-CO-NH-oPh-CH₂-pPh-NH-CO | PTHF /PEG | OC-NH-pPh-CH₂-oPh-NH-CO-NH | CH₂SiMe(OMe)₂ CH₂Si(OMe)₃ |
| E | MeO | MeO | N(Ph)-CO-NH-oPh-CH₂-pPh-NH-CO | PE | OC-NH-pPh-CH₂-oPh-NH-CO-NH | [PO]₆[EO]₂₉Me |
| F | MeO | MeO | N(Ph)-CO-NH-oPh-CH₂-pPh-NH-CO | PTHF | OC-NH-pPh-CH₂-oPh-NH-CO-NH | [PO]₆[EO]₂₉Me |

| | | | | | | |
|---|---|---|---|---|---|---|
| Me: Methyl; MeO: Methoxy Ph: Phenyl; oPh: ortho-Phenylen; pPh: para-Phenylen PPG: Polypropylenglycol-Rest; PE: Polyester-Rest; PTHF: Polytetrahydrofuran-Rest; PEG: Polyethylenglycol PO: Propylenoxy-Rest; EO: Ethylenoxy-Rest | | | | | | |

### Allgemeines Herstellungsbeispiel für die erfindungsgemäßen Emulsionen

10 g des erfindungsgemäßen Polymers A, B, C oder D werden mit dem oder den Emulgatoren (Mengen siehe Tabelle 2) und gegebenenfalls weiteren nicht-wässrigen Additiven (Mengen siehe Tabelle 2) mit einem Speedmixer (DAC 150 FVZ, erhältlich bei der Firma Hauschild) für 20 Sekunden bei 2000 U/min homogenisiert. Anschließend wird 1 g Puffer oder sofern kein Puffer verwendet wird Wasser zugegeben und weitere 20 Sekunden verrührt. Dann wird portionsweise der restliche Puffer und/oder das restliche Wasser zugegeben, worauf jeweils 20 Sekunden verrührt wird, wobei sich eine homogene Creme bildet.

Die fakultativ enthaltenen Zusatzstoffe können entweder zu Beginn oder auch nachträglich, je nach Art des Zusatzstoffes zugegeben werden. Nicht wässrige Bestandteile können daher bereits in der Emulgator-Polymer-Mischung eingearbeitet sein, bevor wässrige Bestandteile zugefügt werden, während wässrige Bestandteile immer dem zunächst hergestellten Emulgator-Polymer-System zugemischt werden.

In Falle des Einsatzes der selbstemulgierenden Polymere E und F wird wie oben verfahren, jedoch gegebenenfalls auf den Zusatz von Emulgatoren verzichtet.

**Tabelle 2**

| Beispiel | Polymer [g] | | | | | | Emulgatoren [g] | | | Wasser [g] | Feststoff [Gew.-%] | pH | Zusätze [g] |
|---|---|---|---|---|---|---|---|---|---|---|---|---|---|
| | A | B | C | D | E | F | G | H | I | | | | |
| 1 | 10 | | | | | | 0,5 | 0,5 | | 4,8 | 70 | 5,8 | 0,02 HCl |
| 2 | 10 | | | | | | 0,5 | 0,5 | | 2,3 | 80 | 5,8 | 0,02 HCl; 0,8 K30 |
| 3 | 10 | | | | | | 0,5 | 0,5 | | 3,2 | 75 | 6,0 | 0,02 HCl; 0,8 K30 |
| 4 | 10 | | | | | | 0,5 | 0,5 | | 1,0 | 84 | 8,3 | 1,3 PufferA; 0,1 GF91; 0,02 DBTL |
| 5 | 10 | | | | | | 0,5 | 0,5 | | 1,8 | 82 | 5,9 | 1,3 PufferA; 3 Kronos |
| 6 | 10 | | | | | | 0,5 | 0,5 | | 1,1 | 84 | 5,9 | 1,3 PufferC; 1 Kronos |
| 7 | 10 | | | | | | 0,5 | 0,5 | | 1,8 | 82 | 5,9 | 1,3 PufferC; 3 Kronos |
| 8 | 10 | | | | | | 0,5 | 0,5 | | 0,0 | 91 | 5,9 | 1,3 PufferA; 1 Kronos |
| 9 | 10 | | | | | | 0,5 | 0,5 | | 0,9 | 84 | 6,0 | 1,3 PufferA |
| 10 | 10 | | | | | | 0,5 | 0,5 | | 5,1 | 67 | 4,0 | 0,02 HCl; 0,8 K30 |
| 11 | 10 | | | | | | 0,5 | 0,5 | | 5,6 | 65 | 4,0 | 0,01 HCl; 0,8 K30 |
| 12 | 10 | | | | | | 0,5 | 0,5 | | 2,6 | 74 | 9,9 | 0,8 K30; 2 Dynasylan |
| 13 | 10 | | | | | | 0,15 | 0,15 | | 1,3 | 80 | 9,0 | 1,3 PufferA; 0,1 GF91; 0,02 DBTL |
| 14 | 10 | | | | | | 0,15 | 0,15 | | 1,3 | 80 | 5,8 | 1,3 PufferA |
| 15 | 10 | | | | | | 0,5 | 0,5 | | 2,6 | 79 | 4,7 | 0,8 K30 |
| 16 | 10 | | | | | | 0,5 | 0,5 | | 5,1 | 67 | 4,0 | 0,02 HCl; 0,8 K30 |
| 17 | 10 | | | | | | 0,5 | 0,5 | | 2,3 | 80 | 5,8 | 0,02 HCl; 0,8 K30 |
| 18 | 10 | | | | | | 0,5 | 0,5 | | 1,4 | 79 | 9,4 | 0,07 GF91; 1,5 Acusol |
| 19 | 10 | | | | | | 0,5 | 0,5 | | 0,0 | 83 | 6,5 | 2,5 Mowiol |
| 20 | 10 | | | | | | 0,85 | 0,85 | | 1,3 | 82 | 5,8 | 1,3 PufferC |
| 21 | 10 | | | | | | 0,15 | 0,15 | | 1,3 | 80 | 5,9 | 1,3 PufferC |
| 22 | 10 | | | | | | 0,05 | 0,05 | | 1,3 | 80 | 6,3 | 1,3 PufferC |
| 23* | 10 | | | | | | 0,0 | 0,0 | | 1,3 | 80 | nb | 1,3 PufferC |
| 24 | 10 | | | | | | 0,5 | 0,5 | | 5,0 | 80 | 6,5 | (Polymer+Emulgator) + Wasser |
| 25* | 10 | | | | | | 0,5 | 0,5 | | 5,0 | 80 | 7,5 | (Wasser+Emulgator) + Polymer |
| 26* | 10 | | | | | | 0,5 | 0,5 | | 5,0 | 80 | 7,5 | (Polymer+Wasser) + Emulgator |
| 27 | | 10 | | | | | | | 2,0 | 0,0 | 64 | nb | 0,7 HPU; 7 PufferA |
| 28 | | 10 | | | | | | | 1,0 | 5,2 | 67 | 6,1 | 0,6 HPU |
| 29 | | 10 | | | | | | | 1,0 | 5,6 | 65 | 3,7 | 0,6 HPU; HCl |
| 30 | | 10 | | | | | | | 1,0 | 0,0 | 73 | nb | 0,6 HPU; 4,0 PufferA |
| 31 | | 10 | | | | | | | 0,5 | 4,4 | 69 | 7,4 | 0,6 HPU |
| 32 | | | | 10 | | | | | 1,0 | 0,0 | 56 | nb | 0,6 HPU; 9,1 PufferA |
| 33 | | | | 10 | | | | | 0,5 | 5,8 | 63 | 3,5 | 0,6 HPU; HCl |
| 34 | | | 10 | | | | | | 1,0 | 0,0 | 67 | nb | 0,6 HPU; 5,6 PufferA |
| 35 | 10 | | | | | | | | 1,0 | 0,0 | 67 | nb | 0,6 HPU; 5,6 PufferA |
| 36 | | | | | 10 | | | | | 7,0 | 58 | 9,5 | 0,6 HPU; NaOH |
| 37 | | | | | 10 | | | | | 7,0 | 58 | 7,0 | 0,6 HPU |
| 38 | | | | | 10 | | | | | 0,0 | 56 | 6,0 | 0,6 HPU; 8,5 PufferA |
| 39 | | | | | 10 | | | | | 7,0 | 58 | 4.0 | 0,6 HPU; HCl |
| 40 | | | | | 10 | | | | | 0,0 | 56 | 4,8 | 0,6 HPU; 8,5 PufferB |
| 41 | | | | | 10 | | | | | 0,0 | 61 | 5,5 | 6,8 PufferA; HCl |
| 42 | | | | | 10 | | | | | 0,0 | 65 | 4,7 | 5,9 PufferB |
| 43 | | | | | 10 | | | | | 10,6 | 48 | 6,3 | |
| 44 | | | | | | 10 | | | | 8,8 | 53 | 7,2 | |
| 45 | | | | | | 10 | | | | 10,0 | 50 | 7,0 | 0,5 HPU |
| 46 | | | | | | 10 | | | | 0,0 | 52 | 4,5 | 0,6 HPU; 10 PufferB |
| 47 | | | | | | 10 | | | | 0,0 | 58 | 5,8 | 8 PufferA |
| 48 | | | | | | 10 | | | | 0,0 | 58 | 4,8 | 8 PufferB |

### Abkürzungen in Tabelle 2:

Polymere A, B, C, D, E und F: siehe Tabelle 1
G: Fettalkohol mit 30 Ethylenoxideinheiten (Disponil A3065, Firma Cognis);
H: Natriumlaurylethersulfat (Disponil FES77,Firma Cognis);
I: Addukt aus Methoxy(polyoxyethylen/polyoxypropylen-2-propylamin (Jeffamin M2070, Firma Huntsman) mit Isocyanatomethyl-dimethoxy-methyl-silan (Geniosil XL42, Firma Wacker);
PufferA: Kaliumdihydrogenphosphat/Dinatriumhydrogenphosphat (92:8, 5 gew.%-ig in Wasser);
PufferB: Dinatriumhydrogenphosphat (5 gew.-%ig in Wasser) / Citronensäure (10 gew.-%ig in Wasser) 2,2 : 1;
PufferC: Kaliumdihydrogenphosphat/Dinatriumhydrogenphosphat (1:1, 5 gew.%-ig in Wasser); NaOH: Natronlauge (8 gew.-%ig);
HCl: Salzsäure (10 gew.-%ig);
Kronos: Titandioxid (Kronos 1001, Firma Kronos);
K30: Polyvinylpyrrolidon (K30, Firma Fluka, 40 gew.-%ig);
Acusol: Polyacrylat (Acusol 801S, Firma Rohm/Haas, 2 gew.-%ig);
Mowiol: Polyvinylalkohol (Mowiol 4-98, Firma Kuraray, 10 gew.-%ig);
GF91: N-Aminoethyl, aminopropyltrimethoxysilan (GF91, Firma Wacker);
HPU: Polyurethan-Polymer (HPU DSX 1514, Firma Cognis, 40 gew.-%ig);
DBTL: Dibutylzinndilaurat (Tinstab BL277, Firma Akzo);
Dynasylan: Siloxanoligomer (Dynasylan HS 2627, Firma Degussa);
nb: nicht bestimmt
"*": Vergleichsbeispiel

### Beurteilung der Emulsionen aus Beispielen 1 bis 48

### Lagerstabilität

Die Proben wurden für unterschiedlich lange Zeiträume bei 23 °C bzw. 40 °C in Glasbehältern mit luftdichtem Schraubverschluss in einem Klimaschrank gelagert.

Nach erfolgter Lagerung wurden die Proben visuell hinsichtlich der Stabilität der Emulsion untersucht. Die Emulsion wurde als lagerstabil bezeichnet, wenn keine sichtbare Phasentrennung erkennbar war und die Fließfähigkeit keine signifikanten Unterschiede aufweist.

Tabelle 3 zeigt die Lagerzeiten in Wochen bzw. Monaten an, in denen keine Trennung der entsprechenden Emulsion erfolgt ist. Bei den angegebenen Zeiten handelt es sich um Mindestzeiten. Da einige Emulsionen erst kurz vor Einreichung der vorliegenden Anmeldung Lagertest unterzogen wurden, sagt eine Lagerzeit von beispielsweise "1 Woche" nur aus, dass die Emulsion nach 1 Woche der Lagerung stabil war. Sollte ein Zerfall nach einer bestimmten Lagerzeit stattgefunden haben, so ist dies in Tabelle 3 kenntlich gemacht.

Zusätzlich wurde als Parameter die Zugscherfestigkeit eines mittels der Emulsionen hergestellten Klebeverbunds direkt nach Herstellung der Emulsion bzw. nach erfolgter 1- oder 2-wöchiger Lagerung bei 25°C - wie im Folgenden beschrieben wird - ermittelt.

### Zugscherfestigkeit

Die Zugscherfestigkeit wurde zur Bestimmung der Reißfestigkeit von Verklebungen wurde in Anlehnung an DIN 53283 und DIN 53281 durchgeführt.

Hierfür werden je zwei Prüfkörper (25 x 100 mm) aus massivem Buchenholz bereit gelegt. Die zu verklebende Fläche (25 x 100 mm) wird einseitig mit der zu prüfenden Emulsion bestrichen und mit zwei Wäscheklammern fixiert. Die Probekörper werden bei Raumtemperatur (25 °C) für 7 Tage gelagert. Anschließend werden sie mit einer Zerreißmaschine der Firma Zwick, Modell Universalprüfmaschine (Typennummer 144501, Kraftaufnahme 10 kN) sowie Buchenholz Prüflingen mit einer Überlappung von 20mm Länge und 25mm Breite und einer Geschwindigkeit von 15 mm/Minute zerrissen. Die sich ergebende Zugscherfestigkeit wird in N/mm² bestimmt.

Tabelle 4 gibt das Verhältnis der Zugscherfestigkeit der Klebeverbunde, die nach Lagerung der Emulsionen hergestellt wurden, bezogen auf die Zugscherfestigkeit von Klebeverbunden, die sofort nach Herstellung der Emulsionen hergestellt wurden in "% des Ausgangswerts" an. Ein Wert von 80 % bedeutet hierbei, dass 80 % der Zugscherfestigkeit bei Verwendung einer gelagerten Emulsion im Vergleich zu einer sofort verwendeten Emulsion erreicht werden.

**Tabelle 3 - Lagerstabilitäten/Mindestlagerzeiten**

| Mindestlagerzeit bei 23 °C | Beispiel-Nr. der Emulsionen |
|---|---|
| > 4 Monate | 1 - 5, 9, 17, 20, 45 |
| > 4 Monate | 6 - 8, 18, 24, 27, 30, 34 - 38 |
| > 4 Monate | 10 - 12, 16, 21, 22, 31, 33, 39, 40 |
| > 4 Monate | 13 - 15, 19, 28, 41, 42,43, 48 |
| >4Monate | 46 |
| Zerfall nach 2 Wochen | 25*, 26* (Formulierungsreihenfolge) |
| Zerfall nach 1 Tag | 23 * (kein Emulgatorzusatz) |
| 3 Monate | 32, 43,47 |
| 2 Monate | 29 |
| 1 Monat | 44 |
| | |

| Mindestlagerzeit bei 40 °C | Beispiel-Nr. der Emulsionen |
|---|---|
| > 4 Monate | 2, 3 |
| > 4Monate | 1, 4, 5 |
| > 4 Monate | 27, 45 |
| > 4 Monate | 37 - 39 |
| > 4 Monate | 30, 34, 35 |
| > 4Monate | 40 - 42, 48 |
| 1 Monat | 32 |
| 5Monate | 33 |

**Tabelle 4 Erreichte Zugscherfestigkeiten im prozentualen Vergleich mit Klebeverbünden aus nichtgelagerten Emulsionen**

| Emulsion aus Beispiel Nr. | Zugscherfestigkeit des Klebeverbunds gelagerter Emulsionen | |
|---|---|---|
| | Lagerzeit 1 Woche | Lagerzeit 2 Wochen |
| 27 | 55,6 | 66,7 |
| 28 | nb | 27,3 |
| 29 | nb | 75,8 |
| 30 | 58,1 | nb |
| 31 | nb | 45,0 |
| 32 | 72,5 | nb |
| 33 | nb | 107,5 |
| 34 | 19,1 | nb |
| 36 | 65,4 | 63,5 |
| 37 | 57,7 | 55,8 |
| 38 | 51,1 | nb |
| 39 | 85,7 | 76,8 |
| 40 | nb | 68,9 |
| 41 | 73,5 | 63,3 |
| 42 | 62,1 | 60,6 |
| 43 | nb | 70,3 |
| 44 | nb | 56,6 |
| 45 | 25,0 | 25,0 |
| 46 | 88,1 | nb |
| 47 | 96,7 | 87,0 |
| 48 | 87,5 | 80,0 |

| | | |
|---|---|---|
| nb: nicht bestimmt | | |

## Patentansprüche

1. Wässrige, lagerstabile Emulsion eines oder mehrerer Polymere, der allgemeinen Formel (I): 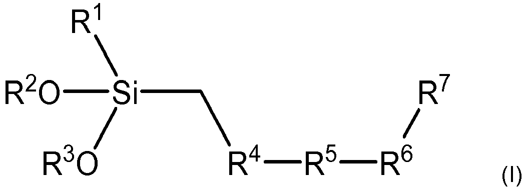 worin
R¹ eine geradkettige oder verzweigte Alkylgruppe oder Alkoxygruppe mit 1 bis 4 Kohlenstoffatomen ist,
R² und R³ unabhängig voneinander eine geradkettige oder verzweigte Alkylgruppe mit 1 bis 4 Kohlenstoffatomen sind,
R⁴ und R⁶ unabhängig voneinander, divalente organische Verbindungsgruppen sind, wobei R⁴ und R⁶ für einen Rest -NR⁹-(CO)-R¹⁰- stehen, wobei der Rest R¹⁰ an R⁵ gebunden ist, und
R⁹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und
R¹⁰ für eine Einfachbindung oder einen Rest -NR¹¹-R¹²- steht, wobei der Rest R¹² an R⁵ gebunden ist, und
R¹¹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und
R¹² für eine Gruppe -R¹³-(NH)ᵣ(CO)- Gruppe mit r = 0 oder 1 steht, worin
R¹³ für eine Alkylaryl-Gruppe mit 6 bis 11 Kohlenstoffatomen, eine Aralkylgruppe mit 6 bis 11 Kohlenstoffatomen oder eine Arylgruppe mit 5 bis 10 Kohlenstoffatomen steht, wobei die CO-Gruppe an R⁵ verbunden ist,
R⁵ ein hydrophober divalenter Polymer-Rest ist; und
R⁷ ein Rest CH₂SiR¹(OR²)(OR³) ist, worin R¹, R² und R³ obige Bedeutung besitzen oder R⁷ für einen Rest steht, der dem Polymer der allgemeinen Formel (I) die Eigenschaft verleiht in Wasser unter Bildung einer Öl-In-Wasser-Emulsion selbst zu emulgieren,
wobei die Emulsion einen pH-Wert von 2 bis 11 und einen Festkörpergehalt von 40 bis 95 Gew.-% bezogen auf das Gesamtgewicht der Emulsion besitzt, und die Emulsion einen oder mehrere anionische und/oder nicht-ionische Emulgatoren enthält, die zur Bildung einer ÖI-in-Wasser-Emulsion befähigt sind; und wobei, für den Fall, dass R⁷ für einen Rest steht, der dem Polymer der allgemeinen Formel (I) die Eigenschaft verleiht in Wasser unter Bildung einer Öl-In-Wasser-Emulsion selbst zu emulgieren,
zumindest ein Teil des Emulgators oder der Emulgatoren durch Polymere der Formel (I) ersetzt sind,
wobei die Emulsion erhältlich ist durch das Zumischen der wässrigen Emulsionsanteile zu einer Mischung aus dem oder den Emulgatoren und dem oder den Polymeren der allgemeinen Formel (I).

2. Emulsion nach Anspruch 1, wobei der oder die anionischen und/oder nichtionischen Emulgatoren, oder deren Mischungen einen HLB-Wert von 8 bis 18, vorzugsweise 8 bis 15 aufweisen.

3. Emulsion nach Anspruch 1 oder 2, wobei R⁷ für -[Propylenoxy]ₙ[Ethylenoxy]ₘ-R⁸ steht, wobei n, m und R⁸ so gewählt sind, dass der Hydrophilie-Lipophilie-Balance-Wert des entsprechenden Amins H₂N-[Propylenoxy]ₙ[Ethylenoxy]ₘ-R⁸ einen Wert von 8 bis 15 besitzt, und R⁸ ein aliphatischer Rest, eine Hydroxy-Gruppe oder eine Amino-Gruppe ist.

4. Emulsion nach einem oder mehreren der Ansprüche 1 bis 3, wobei R¹ für Methyl, Ethyl, Methoxy oder Ethoxy und R² und R³ unabhängig voneinander für Methyl oder Ethyl stehen.

5. Emulsion nach einem oder mehreren der Ansprüche 1 bis 4, wobei R⁵ für den divalenten Rest eines Polypropylenglycols, Polytetrahydrofurans, Polyesters, Polyacrylats, Polymethacrylats, Polycyanacrylats, Polystyrols, Polyamids, Polyvinylacetats, Polycaprolactams, Polycaprolactons, Polybutadiens, Polyethylens, Polyvinylchlorids, Polyacrylamids, Polyacrylnitrils, Polyethylenterephthalats, Polycarbonats, Polysulfids, Polyetherketons, Epoxidharzes, Phenolformaldehydharzes, Polyurethans, Polysiloxans oder eines Copolymers aus Monomeren der genannten Polymere steht.

6. Emulsion nach einem oder mehreren der Ansprüche 1 bis 5, wobei der oder die Emulgatoren gewählt werden aus der Gruppe bestehend aus anionischen und nichtionischen Emulagtoren und Verbindungen der Formel (III) 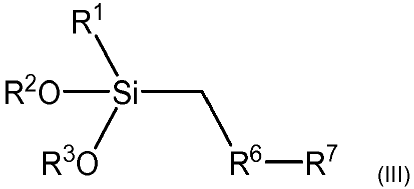 wobei
R¹ eine geradkettige oder verzweigte Alkylgruppe oder Alkoxygruppe mit 1 bis 4 Kohlenstoffatomen ist,
R² und R³ unabhängig voneinander eine geradkettige oder verzweigte Alkylgruppe mit 1 bis 4 Kohlenstoffatomen sind,
R⁶ eine divalente organische Verbindungsgruppe ist; und
R⁷ für einen Rest steht, welcher der Verbindung der allgemeinen Formel (III) die Eigenschaft verleiht in Wasser als Öl-In-Wasser-Emulgator zu wirken.

7. Emulsion nach Anspruch 6, wobei R⁷ für -[Propylenoxy]ₙ[Ethylenoxy]ₘ-R⁸ steht, wobei n, m und R⁸ so gewählt sind, dass der Hydrophilie-Lipophilie-Balance-Wert des entsprechenden Amins H₂N-[Propylenoxy]ₙ[Ethylenoxy]ₘ-R⁸ einen Wert von 8 bis 15 besitzt, und R⁸ ein aliphatischer Rest, eine Hydroxy-Gruppe oder eine Amino-Gruppe ist.

8. Emulsion nach einem oder mehreren der Ansprüche 1 bis 7, wobei der Emulgatorgehalt kleiner 25 Gew.-%, vorzugsweise kleiner 20 Gew.-% besonders bevorzugt kleiner 15 Gew.-% bezogen auf das Gesamtgewicht der Emulsion ist.

9. Emulsion nach einem oder mehreren der Ansprüche 1 bis 8, wobei
R¹ für Methyl, Ethyl, Methoxy oder Ethoxy steht, und
R² und R³ unabhängig voneinander für Methyl oder Ethyl stehen,
R⁴ und R⁶ unabhängig voneinander für eine Harnstoff- und/oder Urethan-Gruppen enthaltende divalente Verbindungsgruppe stehen, wobei R⁴ und R⁶ für einen Rest -NR⁹-(CO)-R¹⁰- stehen, wobei der Rest R¹⁰ an R⁵ gebunden ist, und
R⁹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und
R¹⁰ für eine Einfachbindung oder einen Rest -NR¹¹-R¹²- steht, wobei der Rest R¹² an R⁵ gebunden ist, und
R¹¹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und
R¹² für eine Gruppe -R¹³-(NH)ᵣ-(CO)- Gruppe mit r = 0 oder 1 steht, worin
R¹³ für eine Alkylaryl-Gruppe mit 6 bis 11 Kohlenstoffatomen, eine Aralkylgruppe mit 6 bis 11 Kohlenstoffatomen oder eine Arylgruppe mit 5 bis 10 Kohlenstoffatomen steht, wobei die CO-Gruppe an R⁵ verbunden ist,
R⁵ ein divalenter Polytetrahydrofuran- oder Polyester-Rest ist; und
R⁷ für einen Rest -[Propylenoxy]ₙ[Ethylenoxy]ₘ-R⁸ steht, wobei n, m und R⁸ so gewählt sind, dass der Hydrophilie-Lipophilie-Balance-Wert des entsprechenden Amins
H₂N-[Propylenoxy]ₙ[Ethylenoxy]ₘ-R⁸ einen Wert von 8 bis 15 besitzt, und R⁸ ein aliphatischer Rest, eine Hydroxy-Gruppe oder eine Amino-Gruppe ist.

10. Emulsion nach Anspruch 9, wobei
R⁴ und R⁶ unabhängig voneinander für eine Gruppe der Formel (II): 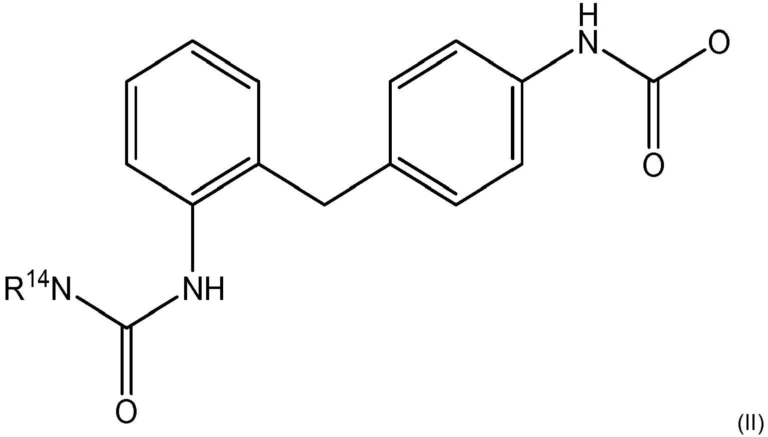 stehen,
wobei die Bindung zu R⁵ über die Urethangruppe erfolgt und
R¹⁴ für Wasserstoff, eine geradkettige oder verzeigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht.

11. Emulsion nach einem oder mehreren der Ansprüche 1 bis 10, wobei der pH-Wert der Emulsion 3 bis 10, vorzugsweise 4 bis 9, besonders bevorzugt 4 bis 7 und ganz besonders bevorzugt 4 bis 6 beträgt.

12. Emulsion nach einem oder mehreren der Ansprüche 1 bis 11, wobei neben dem Polymer der Formel (I), worin R⁷ für einen Rest steht, der dem Polymer der allgemeinen Formel (I) die Eigenschaft verleiht in Wasser unter Bildung einer Öl-In-Wasser-Emulsion selbst zu emulgieren, keine weiteren Emulgatoren enthalten sind.

13. Emulsion nach einem oder mehreren der Ansprüche 1 bis 11, enthaltend eine Mischung aus anionischem und nichtionischem Emulgator.

14. Emulsion nach einem der Ansprüche 6 oder 7, wobei der hydrophobe, divalente Polymer-Rest R⁵ ein Polyester-Rest oder ein Polytetrahydrofuran-Rest ist.

15. Emulsion nach einem oder mehreren der Ansprüche 1 bis 14, die zusätzlich eine oder mehrere Komponenten gewählt aus Füllstoffe, Pigmente, Schutzkolloide, pH-Regler, Puffersubstanzen, Haftvermittler, Tackifier, Katalysatoren, Filmbildner, Weichmacher, Redoxstabiliatoren, UV-Stabilisatoren oder Mittel zur Viskositätsbeeinflussung enthält.

16. Verfahren zur Herstellung einer Emulsion gemäß einem oder mehreren der Ansprüche 1 bis 15, wobei
eine Mischung eines oder mehrerer Polymere der allgemeinen Formel (I) 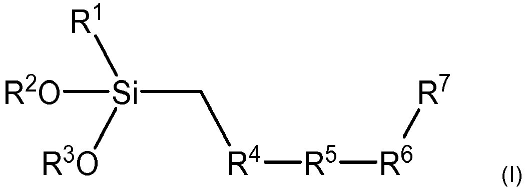 worin
R¹ eine geradkettige oder verzweigte Alkylgruppe oder Alkoxygruppe mit 1 bis 4 Kohlenstoffatomen ist,
R² und R³ unabhängig voneinander eine geradkettige oder verzweigte Alkylgruppe mit 1 bis 4 Kohlenstoffatomen sind,
R⁴ und R⁶ unabhängig voneinander, divalente organische Verbindungsgruppen sind, wobei R⁴ und R⁶ für einen Rest -NR⁹-(CO)-R¹⁰- stehen, wobei der Rest R¹⁰ an R⁵ gebunden ist, und
R⁹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und
R¹⁰ für eine Einfachbindung oder einen Rest -NR¹¹-R¹²- steht, wobei der Rest R¹² an R⁵ gebunden ist, und
R¹¹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und
R¹² für eine Gruppe -R¹³-(NH)ᵣ-(CO)- Gruppe mit r = 0 oder 1 steht, worin
R¹³ für eine Alkylaryl-Gruppe mit 6 bis 11 Kohlenstoffatomen, eine Aralkylgruppe mit 6 bis 11 Kohlenstoffatomen oder eine Arylgruppe mit 5 bis 10 Kohlenstoffatomen steht, wobei die CO-Gruppe an R⁵ verbunden ist,
R⁵ ein hydrophober divalenter Polymer-Rest ist; und
R⁷ ein Rest CH₂SiR¹(OR²)(OR³) ist, worin R¹, R² und R³ obige Bedeutung besitzen oder R⁷ für einen Rest steht, der dem Polymer der allgemeinen Formel (I) die Eigenschaft verleiht in Wasser unter Bildung einer Öl-In-Wasser-Emulsion selbst zu emulgieren,
mit einem oder mehreren anionischen und/oder nicht-ionischen Emulgatoren, die zur Bildung einer ÖI-in-Wasser-Emulsion befähigt sind; und wobei, für den Fall, dass R⁷ für einen Rest steht, der dem Polymer der allgemeinen Formel (I) die Eigenschaft verleiht in Wasser unter Bildung einer Öl-In-Wasser-Emulsion selbst zu emulgieren, zumindest ein Teil des Emulgators oder der Emulgatoren durch Polymere der Formel (I) ersetzt sind,
hergestellt wird, und
dieser Mischung die wässrigen Emulsionsbestandteile zugemischt werden, wobei ein pH-Wert von 2 bis 11 und ein Feststoffgehalt von 40 bis 95 Gew.-%, bezogen auf das Gesamtgewicht der Emulsion eingestellt wird.

17. Verwendung der Emulsionen aus einem oder mehreren der Ansprüche 1 bis 15 oder erhalten durch das Verfahren nach Anspruch 16 zur Herstellung von Klebstoffen, Dichtmassen, Oberflächenbeschichtungsstoffen und polymeren Formmassen oder als Klebstoffe, Dichtmassen, Oberflächenbeschichtungsstoffe und polymeren Formmassen.

18. α-Silyl-terminiertes Polymer der allgemeinen Formel (I): 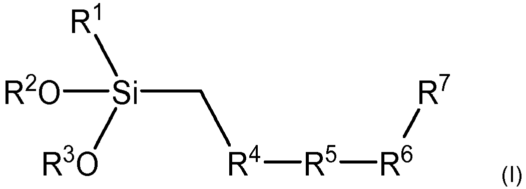 worin
R¹ eine geradkettige oder verzweigte Alkylgruppe oder Alkoxygruppe mit 1 bis 4 Kohlenstoffatomen ist,
R² und R³ unabhängig voneinander eine geradkettige oder verzweigte Alkylgruppe mit 1 bis 4 Kohlenstoffatomen sind,
R⁴ und R⁶ unabhängig voneinander, divalente organische Verbindungsgruppen sind, wobei R⁴ und R⁶ für einen Rest -NR⁹-(CO)-R¹⁰- stehen, wobei der Rest R¹⁰ an R⁵ gebunden ist, und
R⁹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und
R¹⁰ für eine Einfachbindung oder einen Rest -NR¹¹-R¹²- steht, wobei der Rest R¹² an R⁵ gebunden ist, und
R¹¹ für Wasserstoff, eine lineare oder verzweigte Alkylgruppe mit 1 bis 6 Kohlenstoffatomen, eine Cycloalkylgruppe mit 4 bis 6 Kohlenstoffatomen oder eine Arylgruppe mit 5 bis 10 Kohlenstoffatomen steht; und
R¹² für eine Gruppe -R¹³-(NH)ᵣ-(CO)- Gruppe mit r = 0 oder 1 steht, worin
R¹³ für eine Alkylaryl-Gruppe mit 6 bis 11 Kohlenstoffatomen, eine Aralkylgruppe mit 6 bis 11 Kohlenstoffatomen oder eine Arylgruppe mit 5 bis 10 Kohlenstoffatomen steht, wobei die CO-Gruppe an R⁵ verbunden ist,
R⁵ ein hydrophobes divalentes Polymerrückgrat ist; und
R⁷ für einen Rest -[Propylenoxy]ₙ[Ethylenoxy]ₘ-R⁸ steht, bei dem n, m und R⁸ so gewählt sind, dass der HLB-Wert des entsprechenden Amins H₂N-[Propylenoxy]ₙ[Ethylenoxy]ₘ-R⁸ einen Wert von 8 bis 15 besitzt, wobei R⁸ ein aliphatischer Rest, eine Hydroxy-Gruppe oder eine Amino-Gruppe ist.

19. Verwendung des α-silyl-terminierten Polymers nach Anspruch 18 als selbstemulgierendes Polymer in Klebstoffen, Dichtungsmassen, Oberflächenbeschichtungszusammensetzungen oder polymeren Formmassen.

20. Klebstoffe, Dichtungsmassen, Oberflächenbeschichtungszusammensetzungen oder polymere Formmassen enthaltend ein oder mehrere der Emulsionen nach einem oder mehreren der Ansprüche 1 bis 15 und/oder enthaltend ein oder mehrere der α-Silyl-terminierten Polymere nach Anspruch 18.

## Claims

1. An aqueous, storage-stable emulsion of one or more polymers of general formula (I): 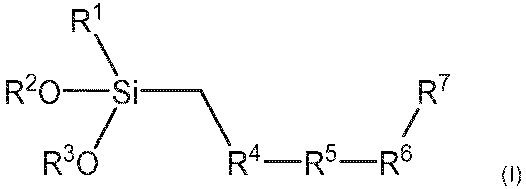 in which
R¹ is a straight-chain or branched alkyl group or alkoxy group having 1 to 4 carbon atoms,
R² and R³, independently of one another, are straight-chain or branched alkyl groups having 1 to 4 carbon atoms,
R⁴ and R⁶, independently of one another, are divalent organic compound groups, R⁴ and R⁶ representing an -NR⁹-(CO)-R¹⁰- residue, the R¹⁰ residue being bonded to R⁵, and
R⁹ represents hydrogen, a linear or branched alkyl group having 1 to 6 carbon atoms, a cycloalkyl group having 4 to 6 carbon atoms, or an aryl group having 5 to 10 carbon atoms; and
R¹⁰ represents a single bond or an -NR¹¹-R¹²- residue, the R¹² residue being bonded to R⁵, and
R¹¹ represents hydrogen, a linear or branched alkyl group having 1 to 6 carbon atoms, a cycloalkyl group having 4 to 6 carbon atoms, or an aryl group having 5 to 10 carbon atoms; and
R¹²represents an -R¹³-(NH)ᵣ-(CO)- group where r = 0 or 1, in which
R¹³ represents an alkyl aryl group having 6 to 11 carbon atoms, an aralkyl group having 6 to 11 carbon atoms, or an aryl group having 5 to 10 carbon atoms, the CO group being bonded to R⁵,
R⁵ is a hydrophobic divalent polymer residue; and
R⁷ is a CH₂SiR¹(OR²)(OR³) residue, in which R¹, R² and R³ are as described above or R⁷ represents a residue which gives the polymer of general formula (I) the property of self-emulsifying in water to form an oil-in-water emulsion,
wherein the emulsion has a pH of from 2 to 11 and a solids content of from 40 to 95 wt.% based on the total weight of the emulsion, and the emulsion comprises one or more anionic and/or non-ionic emulsifiers, which are capable of forming an oil-in-water emulsion; and
wherein, if R⁷ represents a residue which gives the polymer of general formula (I) the property of self-emulsifying in water to form an oil-in-water emulsion,
at least some of the emulsifier(s) is/are replaced by polymers of formula (I),
wherein the emulsion can be obtained by adding the aqueous emulsion components to a mixture of the emulsifier(s) and the polymers of general formula (I).

2. The emulsion according to claim 1, wherein the anionic and/or non-ionic emulsifier(s) or mixtures thereof have an HLB value of from 8 to 18, preferably 8 to 15.

3. The emulsion according to claim 1 or 2, wherein R⁷ represents -[propylene oxy]ₙ[ethylene oxy]ₘ-R⁸, wherein n, m and R⁸ are selected such that the hydrophilic-lipophilic balance value of the corresponding amine H₂N-[propylene oxy]ₙ[ethylene oxy]ₘ-R⁸ is a value of from 8 to 15, and R⁸ is an aliphatic residue, a hydroxyl group or an amino group.

4. The emulsion according to one or more of claims 1 to 3, wherein R¹ represents methyl, ethyl, methoxy or ethoxy, and R² and R³, independently of one another, represent methyl or ethyl.

5. The emulsion according to one or more of claims 1 to 4, wherein R⁵ represents the divalent residue of a polypropylene glycol, polytetrahydrofuran, polyester, polyacrylate, polymethacrylate, polycyanoacrylate, polystyrene, polyamide, polyvinyl acetate, polycaprolactam, polycaprolactone, polybutadiene, polyethylene, polyvinyl chloride, polyacrylamide, polyacrylnitrile, polyethylene terephthalate, polycarbonate, polysulfide, polyetherketone, epoxy resin, phenol formaldehyde resin, polyurethane, polysiloxane or a copolymer of monomers of said polymers.

6. The emulsion according to one or more of claims 1 to 5, wherein the emulsifier or emulsifiers are selected from the group consisting of anionic and non-ionic emulsifiers and compounds of formula (III), 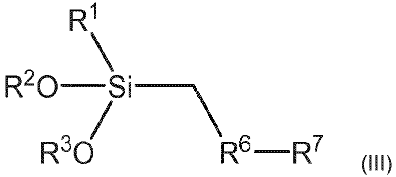 where
R¹ is a straight-chain or branched alkyl group or alkoxy group having 1 to 4 carbon atoms,
R² and R³, independently of one another, are straight-chain or branched alkyl groups having 1 to 4 carbon atoms,
R⁶ is a divalent organic connecting group; and
R⁷ represents a residue that gives the compound of general formula (III) the property of acting as an oil-in-water emulsifier in water.

7. The emulsion according to claim 6, wherein R⁷ represents -[propylene oxy]ₙ[ethylene oxy]ₘ-R⁸, wherein n, m and R⁸ are selected such that the hydrophilic-lipophilic balance value of the corresponding amine H₂N-[propylene oxy]ₙ[ethylene oxy]ₘ-R⁸ is a value of from 8 to 15, and R⁸ is an aliphatic residue, a hydroxyl group or an amino group.

8. The emulsion according to one or more of claims 1 to 7, wherein the emulsifier content is less than 25 wt.%, preferably less than 20 wt.%, particularly preferably less than 15 wt.%, based on the total weight of the emulsion.

9. The emulsion according to one or more of claims 1 to 8, wherein
R¹ represents methyl, ethyl, methoxy or ethoxy, and
R² and R³, independently of one another, represent methyl or ethyl,
R⁴ and R⁶, independently of one another, represent a divalent connecting group containing urea and/or urethane groups, R⁴ and R⁶ representing an -NR⁹-(CO)-R¹⁰-residue, the R¹⁰ residue being bonded to R⁵, and
R⁹ represents hydrogen, a linear or branched alkyl group having 1 to 6 carbon atoms, a cycloalkyl group having 4 to 6 carbon atoms, or an aryl group having 5 to 10 carbon atoms; and
R¹⁰ represents a single bond or an -NR¹¹-R¹²- residue, the R¹² residue being bonded to R⁵, and
R¹¹ represents hydrogen, a linear or branched alkyl group having 1 to 6 carbon atoms, a cycloalkyl group having 4 to 6 carbon atoms, or an aryl group having 5 to 10 carbon atoms; and
R¹² represents an -R¹³-(NH)ᵣ-(CO)- group where r = 0 or 1, in which
R¹³ represents an alkyl aryl group having 6 to 11 carbon atoms, an aralkyl group having 6 to 11 carbon atoms, or an aryl group having 5 to 10 carbon atoms, the CO group being bonded to R⁵,
R⁵ is a divalent polytetrahydrofuran or polyester residue; and
R⁷ represents a -[propylene oxy]ₙ[ethylene oxy]ₘ-R⁸ residue, wherein n, m and R⁸ are selected such that the hydrophilic-lipophilic balance value of the corresponding amine H₂N-[propylene oxy]ₙ[ethylene oxy]ₘ-R⁸ is a value of from 8 to 15, and R⁸ is an aliphatic residue, a hydroxyl group or an amino group.

10. The emulsion according to claim 9, wherein
R⁴ and R⁶ represent, independently of one another, a group of formula (II): 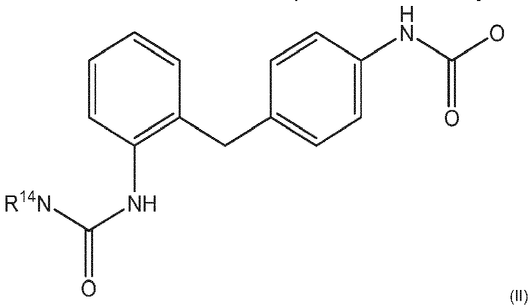
where the bonding to R⁵ takes place by means of the urethane group and
R¹⁴ represents hydrogen, a straight-chain or branched alkyl group having 1 to 6 carbon atoms, a cycloalkyl group having 4 to 6 carbon atoms, or an aryl group having 5 to 10 carbon atoms.

11. The emulsion according to one or more of claims 1 to 10, wherein the pH of the emulsion is 3 to 10, preferably 4 to 9, particularly preferably 4 to 7 and most preferably 4 to 6.

12. The emulsion according to one or more of claims 1 to 11, wherein, in addition to the polymer of formula (I), where R⁷ represents a residue which gives the polymer of general formula (I) the property of self-emulsifying in water to form an oil-in-water emulsion, no additional emulsifiers are contained.

13. The emulsion according to one or more of claims 1 to 11, containing a mixture of anionic and non-ionic emulsifiers.

14. The emulsion according to claim 6 or 7, wherein the hydrophobic, divalent polymer residue R⁵ is a polyester residue or a polytetrahydrofuran residue.

15. The emulsion according to one or more of claims 1 to 14, which additionally contains one or more components selected from fillers, pigments, protective colloids, pH regulators, buffer substances, adhesion promoters, tackifiers, catalysts, film-formers, plasticizers, redox stabilizers, UV stabilizers or agents for influencing viscosity.

16. A method for preparing an emulsion according to one or more of claims 1 to 15, wherein a mixture of one or more polymers of general formula (I) is prepared 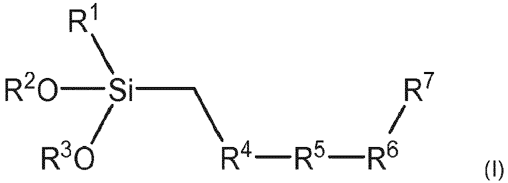 in which
R¹ is a straight-chain or branched alkyl group or alkoxy group having 1 to 4 carbon atoms,
R² and R³, independently of one another, are straight-chain or branched alkyl groups having 1 to 4 carbon atoms,
R⁴ and R⁶, independently of one another, are divalent organic connecting groups, R⁴ and R⁶ representing an -NR⁹-(CO)-R¹⁰- residue, the R¹⁰ residue being bonded to R⁵, and
R⁹ represents hydrogen, a linear or branched alkyl group having 1 to 6 carbon atoms, a cycloalkyl group having 4 to 6 carbon atoms, or an aryl group having 5 to 10 carbon atoms; and
R¹⁰ represents a single bond or an -NR¹¹-R¹²- residue, the R¹² residue being bonded to R⁵, and
R¹¹ represents hydrogen, a linear or branched alkyl group having 1 to 6 carbon atoms, a cycloalkyl group having 4 to 6 carbon atoms, or an aryl group having 5 to 10 carbon atoms; and
R¹² represents an -R¹³-(NH)ᵣ-(CO)- group where r = 0 or 1, in which
R¹³ represents an alkyl aryl group having 6 to 11 carbon atoms, an aralkyl group having 6 to 11 carbon atoms, or an aryl group having 5 to 10 carbon atoms, the CO group being bonded to R⁵,
R⁵ is a hydrophobic divalent polymer residue; and
R⁷ is a CH₂SiR¹(OR²)(OR³) residue, in which R¹, R² and R³ are as described above or R⁷ represents a residue which gives the polymer of general formula (I) the property of self-emulsifying in water to form an oil-in-water emulsion,
comprising one or more anionic and/or non-ionic emulsifiers, which are capable of forming an oil-in-water emulsion; and wherein, if R⁷ represents a residue which gives the polymer of general formula (I) the property of self-emulsifying in water to form an oil-in-water emulsion, at least some of the emulsifier(s) is/are replaced by polymers of formula (I), and
the aqueous emulsion components are added to said mixture, a pH of from 2 to 11 is set and a solids content of from 40 to 95 wt.%, based on the total weight of the emulsion, is set.

17. The use of the emulsions from one or more of claims 1 to 15 or obtained using the method according to claim 16 for preparing adhesives, sealants, surface-coating substances and polymer melts, or as adhesives, sealants, surface-coating substances and polymer melts.

18. α-Silyl-terminated polymer of general formula (I): 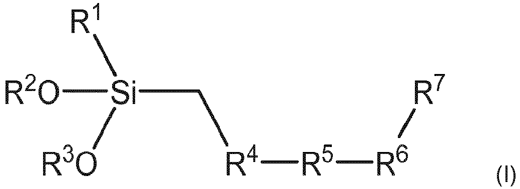 in which
R¹ is a straight-chain or branched alkyl group or alkoxy group having 1 to 4 carbon atoms,
R² and R³, independently of one another, are straight-chain or branched alkyl groups having 1 to 4 carbon atoms,
R⁴ and R⁶, independently of one another, are divalent organic connecting groups, R⁴ and R⁶ representing an -NR⁹-(CO)-R¹⁰- residue, the R¹⁰ residue being bonded to R⁵, and
R⁹ represents hydrogen, a linear or branched alkyl group having 1 to 6 carbon atoms, a cycloalkyl group having 4 to 6 carbon atoms, or an aryl group having 5 to 10 carbon atoms; and
R¹⁰ represents a single bond or an -NR¹¹-R¹²- residue, the R¹² residue being bonded to R⁵, and
R¹¹ represents hydrogen, a linear or branched alkyl group having 1 to 6 carbon atoms, a cycloalkyl group having 4 to 6 carbon atoms, or an aryl group having 5 to 10 carbon atoms; and
R¹² represents an -R¹³-(NH)ᵣ-(CO)- group where r = 0 or 1, in which
R¹³ represents an alkyl aryl group having 6 to 11 carbon atoms, an aralkyl group having 6 to 11 carbon atoms, or an aryl group having 5 to 10 carbon atoms, the CO group being bonded to R⁵,
R⁵ is a hydrophobic divalent polymer backbone; and
R⁷ represents a -[propylene oxy]ₙ[ethylene oxy]ₘ-R⁸ residue, in which n, m and R⁸ are selected such that the HLB value of the corresponding amine H₂N-[propylene oxy]ₙ[ethylene oxy]ₘ-R⁸ is a value of from 8 to 15, and R⁸ is an aliphatic residue, a hydroxyl group or an amino group.

19. The use of the α-silyl-terminated polymer according to claim 18 as a self-emulsifying polymer in adhesives, sealants, surface-coating substances or polymer melts.

20. Adhesives, sealants, surface-coating substances or polymer melts containing one or more of the emulsions according to one or more of claims 1 to 15 and/or containing one or more of the α-silyl-terminated polymers according to claim 18.

## Revendications

1. Émulsion aqueuse, stable au stockage, d'un ou de plusieurs polymères, de la formule générale (I) : 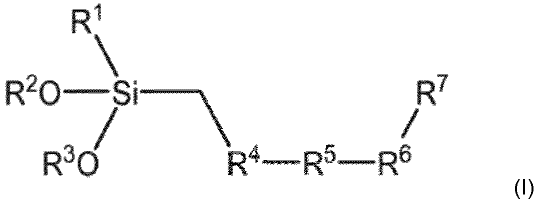 dans laquelle
R¹ est un groupe alkyle linéaire ou ramifié ou un groupe alcoxy ayant 1 à 4 atomes de carbone,
R² et R³ sont indépendamment un groupe alkyle linéaire ou ramifié ayant 1 à 4 atomes de carbone,
R⁴ et R⁶ sont indépendamment des groupes de liaison organiques divalents, R⁴ et R⁶ étant un radical -NR⁹-(CO)-R¹⁰-, le radical R¹⁰ étant lié à R⁵, et
R⁹ étant l'hydrogène, un groupe alkyle linéaire ou ramifié ayant 1 à 6 atomes de carbone, un groupe cycloalkyle ayant 4 à 6 atomes de carbone, ou un groupe aryle ayant 5 à 10 atomes de carbone ; et
R¹⁰ étant une liaison simple ou un radical -NR¹¹-R¹²-, le radical R¹² étant lié à R⁵, et
R¹¹ étant l'hydrogène, un groupe alkyle linéaire ou ramifié ayant 1 à 6 atomes de carbone, un groupe cycloalkyle ayant 4 à 6 atomes de carbone ou un groupe aryle ayant 5 à 10 atomes de carbone ; et
R¹² étant un groupe -R¹³-(NH)ᵣ-(CO)- avec r = 0 ou 1, où
R¹³ est un groupe alkylaryle ayant 6 à 11 atomes de carbone, un groupe aralkyle ayant 6 à 11 atomes de carbone ou un groupe aryle ayant 5 à 10 atomes de carbone, le groupe CO étant lié à R⁵,
R⁵ est un radical polymère hydrophobe divalent ; et
R⁷ est un radical CH₂SiR¹(OR²)(OR³), où R¹, R² et R³ sont tels que définis ci-dessus ou R⁷ est un radical qui confère au polymère de la formule générale (I) la propriété de s'émulsionner dans l'eau pour former une émulsion huile-dans-eau,
l'émulsion ayant un pH de 2 à 11 et une teneur en matières solides de 40 à 95% en poids, sur la base du poids total de l'émulsion, et l'émulsion contenant un ou plusieurs émulsifiants anioniques et/ou non ioniques qui sont capables de former une émulsion huile-dans-eau ; et pour le cas où R⁷ est un radical qui confère au polymère de la formule générale (I) la propriété de s'émulsionner dans l'eau pour former une émulsion huile-dans-eau,
au moins une partie de l'émulsifiant ou des émulsifiants étant remplacée par des polymères de la formule (I),
l'émulsion étant obtenue par ajout de constituants d'émulsion aqueuse à un mélange constitués de l'émulsifiant et des émulsifiants et du polymère ou des polymères de la formule générale (I).

2. Émulsion selon la revendication 1, dans laquelle les émulsifiants anioniques et/ou non-ioniques ou leurs mélanges ont une valeur HLB de 8 à 18, de préférence 8 à 15.

3. Émulsion selon la revendication 1 ou 2, dans laquelle R⁷ est un groupe-[propylèneoxy]ₙ[éthylèneoxy]ₘ-R⁸, où n, m et R⁸ sont choisis de telle sorte que la valeur d'équilibre hydrophilie-lipophilie de l'amine H₂N-[propylèneoxy]ₙ[éthylènoxy]ₘ-R⁸ a une valeur de 8 à 15, et R⁸ est un radical aliphatique, un groupe hydroxyle ou un groupe amine.

4. Émulsion selon l'une ou plusieurs des revendications 1 à 3, dans laquelle R¹ est un groupe méthyle, éthyle, méthoxy ou éthoxy et R² et R³ sont indépendamment un groupe méthyle ou éthyle.

5. Émulsion selon l'une ou plusieurs des revendications 1 à 4, dans laquelle R⁵ est le radical divalent d'un polypropylène-glycol, d'un polytétrahydrofurane, d'un polyester, d'un polyacrylate, d'un polyméthacrylate, d'un polycyanacrylate, d'un polystyrène, d'un polyamide, d'un acétate de polyvinyle, d'un polycaprolactame, d'un polycaprolactone, d'un polybutadiène, d'un polyéthylène, d'un chlorure de polyvinyle, d'un polyacrylamide, d'un polyacrylonitrile, d'un téréphtalate de polyéthylène, d'un polycarbonate, d'un polysulfure, d'un polyéther-cétone, d'une résine époxy, d'une résine de phénol-formaldéhyde, d'un polyuréthane, d'un polysiloxane ou d'un copolymère de monomères des polymères mentionnés.

6. Émulsion selon une ou plusieurs des revendications 1 à 5, dans laquelle Les émulsifiants sont choisis dans le groupe constitué d'émulsifiants anioniques et non-ioniques et des composé de la formule (III) 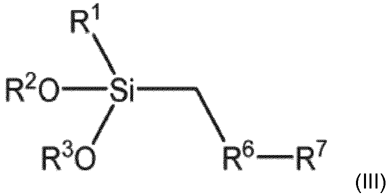 dans laquelle
R¹ est un groupe alkyle linéaire ou ramifié ou un groupe alcoxy ayant 1 à 4 atomes de carbone,
R² et R³ sont indépendamment un groupe alkyle linéaire ou ramifié ayant 1 à 4 atomes de carbone,
R⁶ est un groupe de liaison organique divalent ; et
R⁷ est un radical qui confère au composé de la formule générale (III) la propriété d'agir dans l'eau comme un émulsifiant huile-dans-eau.

7. Émulsion selon la revendication 6, dans laquelle R⁷ représente un groupe-[propylèneoxy]ₙ[éthylèneoxy]ₘ-R⁸, dans laquelle n, m et R⁸ sont choisis de telle sorte que la valeur d'équilibre hydrophilie-lipophilie de l'amine H₂N-[propylèneoxy]ₙ[éthylènoxy]ₘ-R⁸ a une valeur de 8 à 15, et R⁸ est un radical aliphatique, un groupe hydroxyle ou un groupe amine.

8. Émulsion selon l'une ou plusieurs des revendications 1 à 7, dans laquelle la teneur en émulsifiant est inférieure à 25% en poids, de préférence inférieure à 20% en poids, de façon particulièrement préférée inférieure à 15% en poids, sur la base du poids total de l'émulsion.

9. Émulsion selon l'une ou plusieurs des revendications 1 à 8, dans laquelle
R¹ est un groupe méthyle, éthyle, méthoxy ou éthoxy, et
R² et R³ sont indépendamment un groupe méthyle ou éthyle,
R⁴ et R⁶ sont indépendamment un groupe de liaison divalent contenant des groupes urée et/ou uréthane, où R⁴ et R⁶ sont un radical -NR⁹-(CO)-R¹⁰-, le radical R¹⁰ étant lié à R⁵, et
R⁹ étant l'hydrogène, un groupe alkyle linéaire ou ramifié ayant 1 à 6 atomes de carbone, un groupe cycloalkyle ayant 4 à 6 atomes de carbone, ou un groupe aryle ayant 5 à 10 atomes de carbone ; et
R¹⁰ étant une liaison simple ou un radical -NR¹¹-R¹²-, le radical R¹² étant lié à R⁵, et
R¹¹ étant l'hydrogène, un groupe alkyle linéaire ou ramifié ayant 1 à 6 atomes de carbone, un groupe cycloalkyle ayant 4 à 6 atomes de carbone ou un groupe aryle ayant 5 à 10 atomes de carbone ; et
R¹² étant un groupe -R¹³-(NH)ᵣ-(CO)- avec r = 0 ou 1, où
R¹³ est un groupe alkylaryle ayant 6 à 11 atomes de carbone, un groupe aralkyle ayant 6 à 11 atomes de carbone ou un groupe aryle ayant 5 à 10 atomes de carbone, le groupe CO étant lié à R⁵,
R⁵ est un radical polymère hydrophobe divalent ; et
R⁷ est un groupe -[propylèneoxy]ₙ[éthylèneoxy]ₘ-R⁸, où n, m et R⁸ sont choisis de telle sorte que la valeur d'équilibre hydrophilie-lipophilie de l'amine H₂N-[propylèneoxy]ₙ[éthylènoxy]ₘ-R⁸ a une valeur de 8 à 15, et R⁸ est un radical aliphatique, un groupe hydroxyle ou un groupe amine.

10. Émulsion selon la revendication 9, dans laquelle
R⁴ et R⁶ sont indépendamment un groupe de la formule (II) : 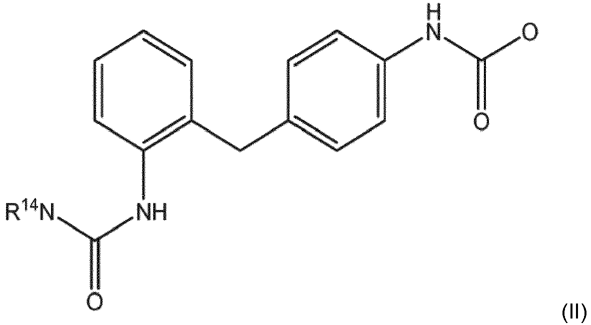
dans laquelle la liaison à R⁵ est effectuée par le biais du groupe uréthane et
R¹⁴ est un atome d'hydrogène, un groupe alkyle linéaire ou ramifié ayant 1 à 6 atomes de carbone, un groupe cycloalkyle ayant 4 à 6 atomes de carbone, ou un groupe aryle ayant 5 à 10 atomes de carbone.

11. Émulsion selon l'une ou plusieurs des revendications 1 à 10, dans laquelle la valeur de pH de l'émulsion est de 3 à 10, de préférence de 4 à 9, de façon particulièrement préférée de 4 à 7 et de façon tout particulièrement préférée de 4 à 6.

12. Émulsion selon l'une ou plusieurs des revendications 1 à 11, dans laquelle aucun autre émulsifiant n'est contenu en plus du polymère de la formule (I) dans laquelle R⁷ est un radical qui confère au polymère de la formule (I) la propriété de s'émulsionner à l'eau pour former une émulsion huile-dans-eau.

13. Émulsion selon l'une ou plusieurs des revendications 1 à 11, contenant un mélange d'émulsifiant anionique et d'émulsifiant non-ionique.

14. Émulsion selon l'une quelconque des revendications 6 ou 7, dans laquelle le radical polymère divalent hydrophobe R⁵ est un radical polyester ou un radical polytétrahydrofuranne.

15. Émulsion selon l'une ou plusieurs des revendications 1 à 14, qui contient en outre un ou plusieurs composants choisis parmi les charges, les pigments, les colloïdes protecteurs, les régulateurs de pH, les substances tampons, les promoteurs d'adhérence, les agents collants, les catalyseurs, les agents filmogènes, les plastifiants, les stabilisants Redox, les stabilisants UV ou les agents influençant la viscosité.

16. Procédé de production d'une émulsion selon l'une ou plusieurs des revendications 1 à 15, dans lequel on produit un mélange d'un ou de plusieurs polymères, de la formule générale (I) : 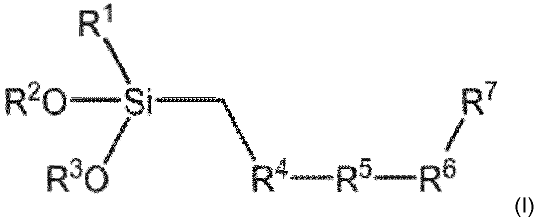 dans laquelle
R¹ est un groupe alkyle linéaire ou ramifié ou un groupe alcoxy ayant 1 à 4 atomes de carbone,
R² et R³ sont indépendamment un groupe alkyle linéaire ou ramifié ayant 1 à 4 atomes de carbone,
R⁴ et R⁶ sont indépendamment des groupes de liaison organiques divalents, R⁴ et R⁶ étant un radical -NR⁹-(CO)-R¹⁰-, le radical R¹⁰ étant lié à R⁵, et
R⁹ étant l'hydrogène, un groupe alkyle linéaire ou ramifié ayant 1 à 6 atomes de carbone, un groupe cycloalkyle ayant 4 à 6 atomes de carbone, ou un groupe aryle ayant 5 à 10 atomes de carbone ; et
R¹⁰ étant une liaison simple ou un radical -NR¹¹-R¹²-, le radical R¹² étant lié à R⁵, et
R¹¹ étant l'hydrogène, un groupe alkyle linéaire ou ramifié ayant 1 à 6 atomes de carbone, un groupe cycloalkyle ayant 4 à 6 atomes de carbone ou un groupe aryle ayant 5 à 10 atomes de carbone ; et
R¹² étant un groupe -R¹³-(NH)ᵣ-(CO)- avec r = 0 ou 1, où
R¹³ est un groupe alkylaryle ayant 6 à 11 atomes de carbone, un groupe aralkyle ayant 6 à 11 atomes de carbone ou un groupe aryle ayant 5 à 10 atomes de carbone, le groupe CO étant lié à R⁵,
R⁵ est un radical polymère hydrophobe divalent ; et
R⁷ est un radical CH₂SiR¹(OR²)(OR³), où R¹, R² et R³ sont tels que définis ci-dessus ou R⁷ est un radical qui confère au polymère de la formule générale (I) la propriété de s'émulsionner dans l'eau pour former une émulsion huile-dans-eau,
avec un ou plusieurs émulsifiants anioniques et/ou non ioniques qui sont capables de former une émulsion huile-dans-eau ; et pour le cas où R⁷ est un radical qui confère au polymère de la formule générale (I) la propriété de s'émulsionner dans l'eau pour former une émulsion huile-dans-eau, au moins une partie de l'émulsifiant ou des émulsifiants étant remplacée par des polymères de la formule (I), et
on ajoute à ce mélange les constituants d'émulsion aqueuse, une valeur de pH de 2 à 11 et une teneur en matières solides de 40 à 95% en poids étant réglées sur la base du poids total de l'émulsion.

17. Utilisation des émulsions selon l'une ou plusieurs des revendications 1 à 15 ou obtenues par le procédé selon la revendication 16 pour la production d'adhésifs, de produits d'étanchéité, de matériaux de revêtement de surface et de produits de moulage polymères ou comme adhésifs, compositions d'étanchéité, matériaux de revêtement de surface et compositions de moulage polymères.

18. Polymère à terminaison α-silyle de la formule générale (I) : 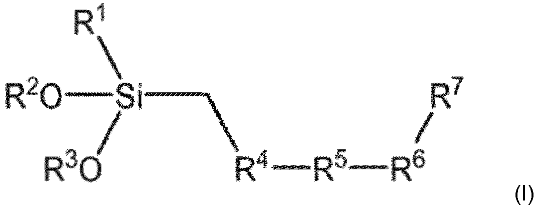 dans laquelle
R¹ est un groupe alkyle linéaire ou ramifié ou un groupe alcoxy ayant 1 à 4 atomes de carbone,
R² et R³ sont indépendamment un groupe alkyle linéaire ou ramifié ayant 1 à 4 atomes de carbone,
R⁴ et R⁶ sont indépendamment des groupes de liaison organiques divalents, R⁴ et R⁶ étant un radical -NR⁹-(CO)-R¹⁰-, le radical R¹⁰ étant lié à R⁵, et
R⁹ étant l'hydrogène, un groupe alkyle linéaire ou ramifié ayant 1 à 6 atomes de carbone, un groupe cycloalkyle ayant 4 à 6 atomes de carbone, ou un groupe aryle ayant 5 à 10 atomes de carbone ; et
R¹⁰ étant une liaison simple ou un radical -NR¹¹-R¹²-, le radical R¹² étant lié à R⁵, et
R¹¹ étant l'hydrogène, un groupe alkyle linéaire ou ramifié ayant 1 à 6 atomes de carbone, un groupe cycloalkyle ayant 4 à 6 atomes de carbone ou un groupe aryle ayant 5 à 10 atomes de carbone ; et
R¹² étant un groupe -R¹³-(NH)ᵣ-(CO)- avec r = 0 ou 1, où
R¹³ est un groupe alkylaryle ayant 6 à 11 atomes de carbone, un groupe aralkyle ayant 6 à 11 atomes de carbone ou un groupe aryle ayant 5 à 10 atomes de carbone, le groupe CO étant lié à R⁵,
R⁵ est un radical polymère hydrophobe divalent ; et
R⁷ est un groupe -[propylèneoxy]ₙ[éthylèneoxy]ₘ-R⁸, où n, m et R⁸ sont choisis de telle sorte que la valeur d'équilibre hydrophilie-lipophilie de l'amine H₂N-[propylèneoxy]ₙ[éthylènoxy]ₘ-R⁸ a une valeur de 8 à 15, et R⁸ est un radical aliphatique, un groupe hydroxyle ou un groupe amine.

19. Utilisation du polymère à terminaison α-silyle selon la revendication 18 comme polymère dans des adhésifs, des compositions d'étanchéité, des matériaux de revêtement de surface et des compositions de moulage polymères.

20. Adhésifs, des compositions d'étanchéité, des matériaux de revêtement de surface et des compositions de moulage polymères comprenant une ou plusieurs des émulsions selon l'une ou plusieurs des revendications 1 à 15 et/ou contenant un ou plusieurs des polymères à terminaison α-silyle selon la revendication 18.
